# EUROPEAN PATENT APPLICATION

(11) **EP 1 953 712 A2**
(43) Date of publication of application: **06.08.2008**
(21) Application number: 08000891.5
(22) Date of filing: 08.03.2006
(51) Int. Cl.: G07D 11/00, G07F 19/00

(54) **Check accepting and cash dispensing automated banking machine system and method**

(30) Priority: 09.03.2005 US 659994 P; 03.05.2005 US 677805 P; 03.05.2005 US 677804 P; 03.05.2005 US 677846 P; 03.05.2005 US 677767 P; 04.05.2005 US 678091 P; 04.05.2005 US 677891 P; 04.05.2005 US 678102 P; 04.05.2005 US 678094 P
(62) Divisional of application: 06737499.1
(71) Applicant: DIEBOLD, INCORPORATED, North Canton, OH 44720 (US)
(72) Inventor: Vankirk, Thomas, A., Wooster Ohio 44691 (US); Washington, Jon, E., Clinton Ohio 44216 (US); Jones, Brian, Navarre Ohio 44662 (US); Beskitt, William, D., Canton Ohio 44709 (US); Graef, Harry, Thomas, Bolivar Ohio 44612 (US); Peters, David, A., Tallmadge Ohio 44278 (US); Blackford, Damon, J., Akron Ohio 44333 (US); Blackson, Dale, H., Canton Ohio 44718 (US); Laskowski, Edward, L., Seven Hills Ohio 44131 (US); Ma, Songtao, Wadsworth Ohio 44281 (US); Crews, Tim, Alliance Ohio 44601 (US); Turocy, Kenneth, Wadsworth Ohio 44281 (US); Dominick, Douglas, T., North Canton Ohio 44720 (US); Smolk, Jasen, J., Fairlawn Ohio 44333 (US); Lucas, Brian, E., Clinton Ohio 44216 (US); Lightner, Bradley, Canton Ohio 44707 (US)
(74) Representative: Meldrum, David James

(57) **Abstract**

An automated banking machine system and method includes ATMs which accept checks and dispense cash to users. The ATMs are operated to acquire image and magnetic data from deposited checks to determine the genuineness of checks and the authority of a user to receive cash for such checks. Cash may be dispensed to the user from the ATM in exchange for the deposited check. The ATMs dispense cash responsive to communications with a transaction host.

## Description

### TECHNICAL FIELD

This invention relates to automated banking machines. Specifically this invention relates to devices and systems which may receive deposits of sheets such as checks and/or other instruments, into an automated banking machine.

### BACKGROUND ART

Automated banking machines are known in the prior art. Automated banking machines are commonly used to carry out transactions such as dispensing cash, checking account balances, paying bills and/or receiving deposits from users. Other types of automated banking machines may be used to purchase tickets, to issue coupons, to present checks, to print scrip and/or to carry out other functions either for a consumer or a service provider. For purposes of this description any device which is used for carrying out transactions involving transfers of value shall be referred to as an automated banking machine.

The disclosure of U.S. Patent No. 6,474,548 issued November 5, 2002 is incorporated herein by reference as though fully rewritten herein.

Thus there exists a need for a deposit accepting apparatus and system for use in connection with automated banking machines that has the capability of handling and imaging more types of items, which may do so more reliably and which can be used in connection with more types of transactions and systems.

### DISCLOSURE OF INVENTION

It is an object of an exemplary embodiment of the present invention to provide an automated banking machine.

It is a further object of an exemplary embodiment of the present invention to provide an automated banking machine system and method that accepts deposits and provides cash to a user.

It is a further object of an exemplary embodiment of the present invention to provide a deposit accepting apparatus.

It is a further object of an exemplary embodiment of the present invention to provide a deposit accepting apparatus for use in connection with an automated banking machine.

It is a further obj ect of an exemplary embodiment of the present invention to provide a deposit accepting apparatus which can be used to accept, image and verify the authenticity of items.

Further objects of exemplary embodiments of the present invention will be made apparent in the following Best Modes For Carrying Out Invention and the appended claims.

In an exemplary embodiment a deposit accepting apparatus of a cash dispensing ATM operates to accept documents. These documents may include checks, currency bills and/or other types of documents. A single deposit accepting device may accept multiple types of documents. In this embodiment a document such as a check is received through an opening in the housing of the ATM and moved in a transport path therein in a first direction by a first transport. Sensors are operative to sense the document has moved into a suitable location within the device. The document is then disengaged from the first transport and engaged with a pair of second transports which are disposed from one another in the first direction. The second transports engage the document and are operative to move the document in the transport path a direction transverse of the first direction. The first transport disengages from the document such that the second transports can move the document and align an edge thereof extending along the first direction with a plurality of non-contact sensors. At least one processor operates in accordance with its programming to control the second transports and controls movement of the document in the second direction such that an edge of the document is aligned with the non-contact sensors which serve as a "virtual wall" for purposes of positioning the document.

Once the document is aligned such that an edge extends along the first direction in the desired orientation, the first transport reengages the document while the second transports disengage. The document is then moved again in the first direction past one or more appropriate sensing devices. In the exemplary embodiment because the document is aligned along the first direction, documents which are checks may have magnetic indicia such as the micr line or other portion thereof, read through operation of one or more magnetic sensors such as a magnetic read head. Alternatively or in addition when the document is moved in a first direction, the magnetic properties of the document may be read or otherwise sensed in a plurality of locations by one or more magnetic sensors which are operative to read magnetic properties of the document, including indicia thereon such as the micr line and/or other features.

In this exemplary embodiment the check is moved in a first direction past a pair of scanning sensors. The scanning sensors are operative to read optical indicia on each side of the check and to produce image data corresponding thereto. The data corresponding to the optical indicia may be processed such that data corresponding to images of the front and rear of the check or portions thereof are generated and stored through operation of the processor in one or more data stores of the ATM. The indicia on the check may also be analyzed for purposes of determining information regarding on the check so that it can be used in conducting a transaction.

In this embodiment once a check has been moved past the sensors which capture data corresponding to optical indicia, the check is moved in generally the first direction into an area which may serve as an escrow area for checks. In some embodiments the escrow area may be of sufficient length so that multiple checks or other documents may be temporarily stored therein. In the exemplary embodiment, the machine operates to determine whether the check is to be accepted or returned to the customer while the check is held in the escrow area. For example in some embodiments one or more processors in the ATM may operate to determine if the check can be sufficiently accurately read, redeemed for cash or otherwise processed while the check is stored in the escrow area. If it is determined that the check cannot be accepted, one or more transports are operative to move the check out of the ATM so that the check is returned to the customer.

Alternatively if the check is found to be suitable for acceptance, the check is moved from the escrow area past one or more stamper printers. The stamper printer is operative to apply ink marks to one or more surfaces of the check so as to indicate that the check has been cancelled or otherwise processed. In an exemplary embodiment the check is thereafter moved into a vertically extending transport. As the check enters the vertical transport, printing is conducted on the check through operation of a suitable inkjet or other printer. Appropriate printing is applied to the check to indicate it has been cancelled or otherwise processed as the check moves past the inkjet printer. Of course printing of various indicia may be applied when other types of documents are processed.

In the exemplary embodiment the inkjet printer has aligned on an opposed side of the transport therefrom, an ink catcher mechanism. The ink catcher mechanism of the exemplary embodiment includes a movable head. The movable head includes an opening therein such that the opening may be aligned with the ink spraying nozzles on the head of the inkjet printer so as to receive ink therein that is not deposited on the check or other document. The exemplary embodiment of the movable head also includes a wiper. The head is moved through operation of a motor or other moving device at appropriate times so that the wiper engages the head of the inkjet printer so as to minimize the buildup of ink and contaminants thereon. This facilitates accurate printing and helps to minimize the risk of potential damage to checks by the accumulation of excess ink within the machine.

Checks or other documents that move past the printer in the vertical transport are moved downward in the exemplary embodiment into a storage area. Once the documents have moved adjacent a lower surface of the storage area a transversely movable plunger mechanism is operative to engage the check and move it out of the vertical transport. In an exemplary embodiment the plunger mechanism is operative to be movable such that the check can be either moved into a storage location on either transverse side of the vertical transport. Once the check is moved out of the transport by the plunger mechanism the check or other document may be held in intermediate relation between a pair of wall surfaces and a spring biased backing plate. As a result checks or other documents may be selectively moved by the plunger mechanism for storage in a selected one of the locations in the storage area.

Various approaches may be taken in the operation of automated banking machines for storing documents that are received by the document accepting mechanism. For example in some embodiments the mechanism may only accept checks. In such embodiments the machine may operate in accordance with its programming to segregate checks that are drawn on the particular institution owning the ATM that receives the check, from checks that are drawn on other institutions. Alternatively the ATM may be programmed to store valid checks in one compartment and suspect checks in another compartment. Alternatively in some other embodiments the document accepting mechanism may store multiple types of documents. For example in an ATM that accepts currency bills and checks through the mechanism, bills may be stored in one compartment while checks are stored in another. Various approaches may be taken based on the programming of the particular automated banking machine.

Numerous types of novel systems and methods are taught by the disclosure hereof.

### BRIEF DESCRIPTION OF DRAWINGS

Figure 1 is an isometric view of an exemplary deposit accepting apparatus shown in an open condition for servicing.
Figure 2 is an opposite hand isometric view of the deposit accepting apparatus shown in Figure 1.
Figure 3 is a schematic view of the devices included in the deposit accepting apparatus.
Figure 4 is a top isometric view of a portion of an upper platen including elements of a first transport which moves documents in a first longitudinal direction in the deposit accepting apparatus and second transports which move documents in a direction transverse to the first direction.
Figure 5 is a side view of the platen and first and second drives shown in Figure 84.
Figure 6 is a bottom view corresponding to Figures 4 and 5 showing the platen with rolls of the first and second transports extending therethrough.
Figure 7 is a top plan view of an upper platen and a lower platen of a transport mechanism of the exemplary deposit accepting apparatus.
Figure 8 is a front view showing the positions of the first and second transports corresponding to Figure 7.
Figure 9 is a view similar to Figure 7 with the transports operating to move a document in a first direction.
Figure 10 is a front view of the first and second transports corresponding to Figure 9.
Figure 11 is a view similar to Figure 9 with the document moved further into the deposit accepting apparatus.
Figure 12 is a front plan view showing the positions of the first and second transports.
Figure 13 is a view similar to Figure 11 showing the document moved in a second direction transverse to the first direction.
Figure 14 is a front plan view showing the relative positions of the first and second transports when a document is moved in a transverse direction.
Figure 15 is a view similar to Figure 13 showing an edge of the document aligned with the non-contact sensors.
Figure 16 corresponds to Figure 15 and shows the positions of the first and second transports.
Figure 17 is a view similar to Figure 15 but showing an alternative document including a folded edge.
Figure 18 is a front view of the first and second transports corresponding to Figure 17.
Figure 19 is an isometric view showing the movable mounting of the exemplary magnetic read head of the embodiment.
Figure 20 is a partially sectioned view corresponding to Figure 19 further showing the movable mounting for the magnetic read head.
Figure 21 is a cross-sectional side view of the mounting for the magnetic read head as shown in Figure 19.
Figure 22 is an isometric view showing an ink catcher mechanism of an exemplary embodiment.
Figure 23 is a partially exploded view showing the movable head disposed from the body of the ink catcher.
Figure 24 is an exploded isometric view showing the body of the ink catcher of Figure 22.
Figure 25 is a partially exploded view of an exemplary form of the stamper printer used in the exemplary embodiment.
Figure 26 is another exploded view of the exemplary stamper printer.
Figure 27 is a side view showing the eccentric profile of the exemplary embodiment of the printing roll of the stamper printer.
Figure 28 is an isometric view of the storage compartment of the alternative deposit accepting mechanism shown with the storage compartment having its access door in an open position.
Figure 29 is an isometric view of the guide of the vertically extending transport that extends in the storage area.
Figure 30 is a side view of the vertically extending transport that extends in the storage area of the exemplary deposit accepting apparatus.
Figure 31 is an isometric view of the apparatus shown accepting a document into the vertically extending transport.
Figures 32 through 35 show the sequential movement of an exemplary plunger member as it operates to move a document held in the vertically extending transport into a storage location positioned on the left side of the storage mechanism as shown.
Figure 36 is an isometric view similar to Figure 31 showing the vertical transport of the accepting a document therein.
Figures 37 through 40 show the sequential movement of the exemplary plunger member to move a document in the vertical transport to a storage location on the right side of the vertical transport as shown.
Figure 41 is a perspective view of an embodiment of an automated banking machine.
Figure 42 is a schematic view of an embodiment of an automated banking machine.

### BEST MODES FOR CARRYING OUT INVENTION

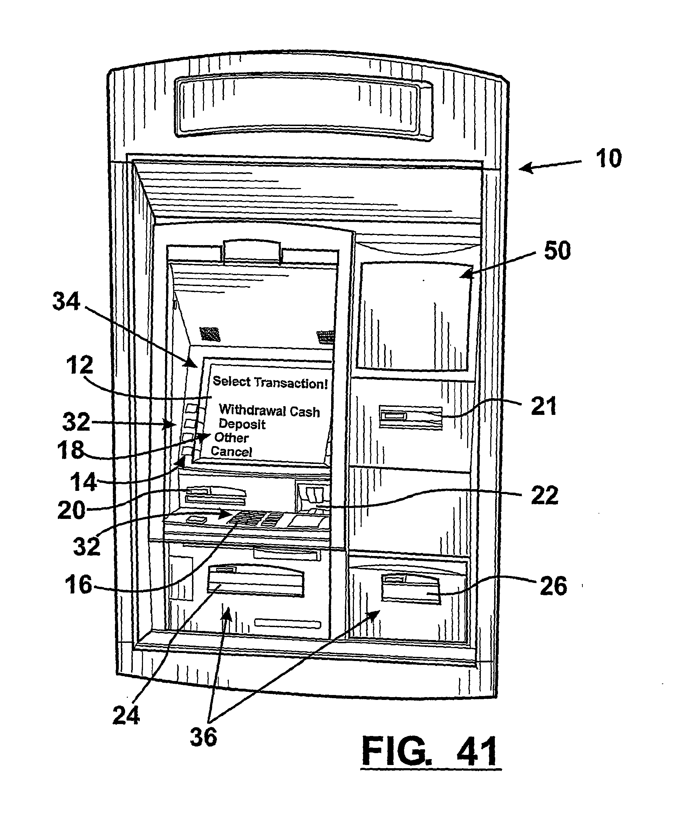

Referring now to the drawings and particularly to Figure 41, there is shown therein a perspective view of an exemplary embodiment of automated banking machine 10. Here the automated banking machine 10 may include a user interface 50 that includes at least one output device 34 such as a display device 12. The display device 12 may be operative to provide a consumer with a user interface output 18 that may include a plurality of screens or other outputs including selectable options for operating the machine. The exemplary embodiment may further include other types of output devices such as a receipt printer 20, speakers, or any other type of device that is capable of outputting visual, audible, or other sensory perceptible information.

The user interface of the automated banking machine may also include a plurality of input devices 32 such as an encrypting pin pad with keypad 16 and function keys 14 as well as a card reader 22. The exemplary embodiment may further include or use other types of input devices, such as a touch screen, microphone, or any other device that is operative to provide the machine with inputs representative of user instructions or information. The machine may also include one or more biometric input devices such as a fingerprint scanner, an iris scanner, facial recognition device, hand scanner, or any other biometric reading device which may be used to read a biometric input that can be used to identify a user.

The exemplary embodiment of the automated banking machine 10 may further include a plurality of transaction function devices which may include for example a cash dispenser 24 and a deposit accepting device 26, or any other type of device which is operative to perform transaction functions involving transfers of value.

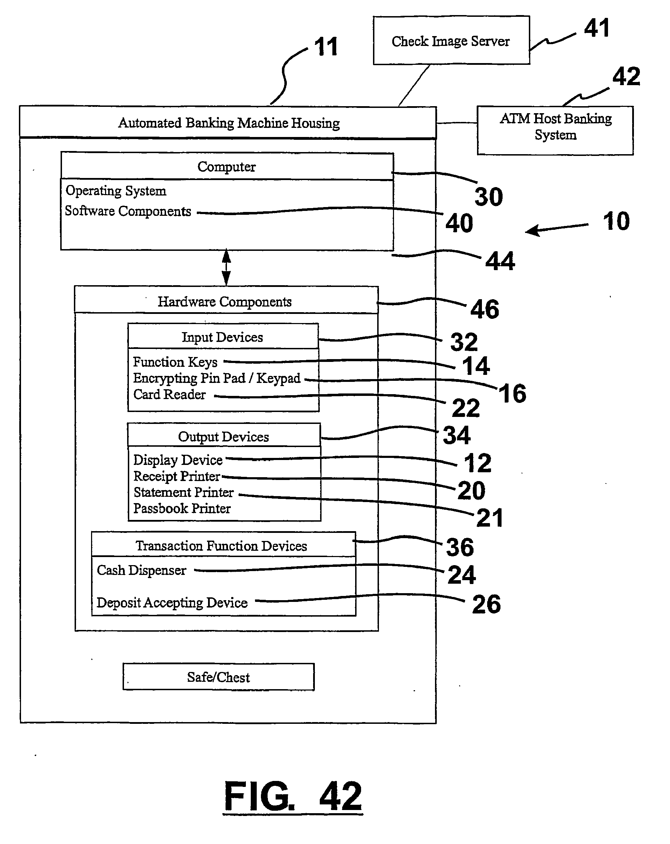

Figure 42 shows a schematic view of components which may be included in a housing 11 of the automated banking machine 10. The machine 10 may include at least one terminal processor or computer 30. The computer 30 maybe in operative connection with the input device(s) 32, the output device(s) 34, and the transaction function device(s) 36. The exemplary embodiment may further include at least one terminal control software component 40 operative in the computer 30. The terminal control software components may be operative to control the operation of the machine by both a consumer and an authorized user such as a service technician. For example such terminal control software components may include applications which enable a consumer to dispense cash, deposit a check, or perform other transaction functions with the machine. In addition the terminal control software components may include applications which enable a service technician to perform configuration, maintenance, and diagnostic functions with the machine.

Exemplary embodiments of the automated banking machine 10 are operative to communicate with a remote computer such as a transaction processing server which is referred to herein as an ATM host banking system 42. Such an ATM host banking system 42 is operative to authorize the automated banking machine 10 to perform transaction functions for users such as withdrawing cash from an account through operation of the cash dispenser 24, depositing checks or other items with the deposit accepting device 26, performing a balance inquiry for a financial account and transferring value between accounts. For example, the computer 30 may be operative to cause the cash dispenser to operate responsive to at least one communication received by the machine from the ATM host banking system.

Exemplary embodiments of the automated banking machine 10 are also operative to communicate with a remote computer such as an document image server 41. A document image server may correspond to a check image server that is operative to receive images of checks or other items scanned by a deposit accepting device of the ATM. For example, the deposit accepting device may include at least one optical scanning sensor operative to scan one or both faces of a check and produce one or more color, grayscale and/or black and white images of the faces of the check. The computer may then cause the machine to send data corresponding to the scanned images to the check image server.

In exemplary embodiments, the ATM host banking system 42 and check image server 41 may correspond to two separate servers. However, in alternative embodiments the host banking system 42 and check image server 41 may correspond to a common remote computer.

The incorporated disclosure of U.S. Patent No. 6,474,548 discloses a deposit accepting device of a cash dispensing ATM. For purposes of this disclosure a deposit accepting device shall be construed to encompass any apparatus which senses indicia on documents input to an automated banking machine.

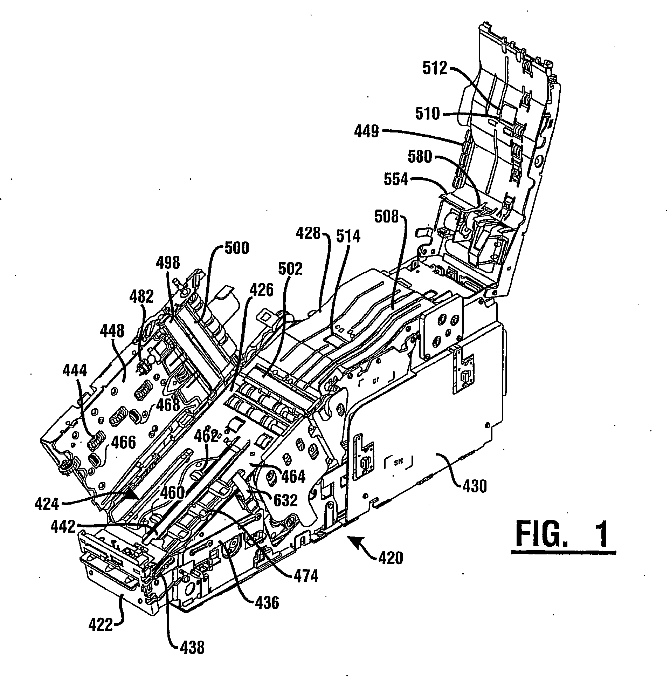

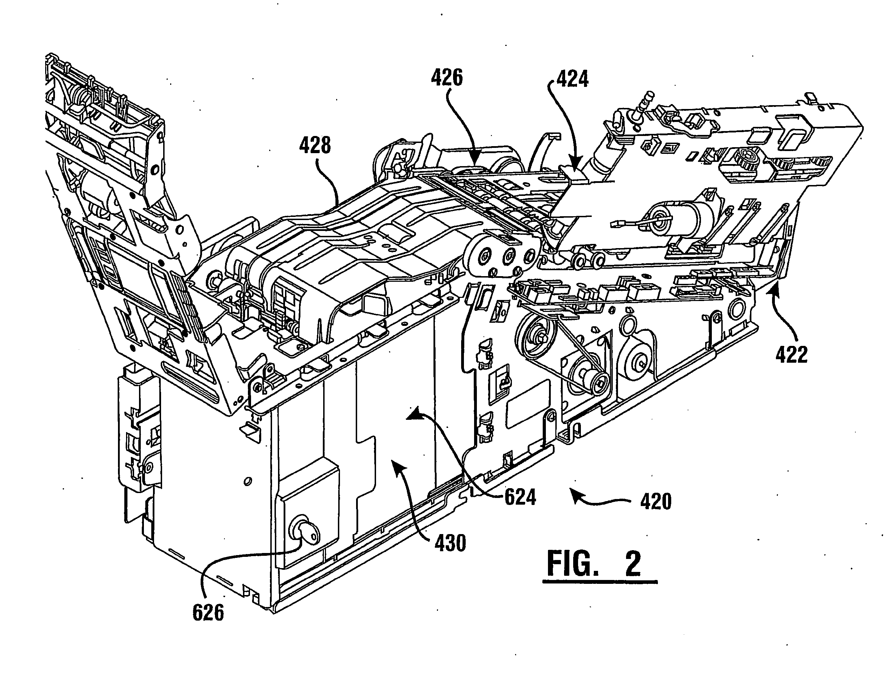

A deposit accepting device 420 of an exemplary embodiment and having the features described hereafter is shown in Figure 1. The deposit accepting device is shown with the mechanism open so as to enable more readily describing its components. The deposit accepting mechanism would be open in the manner shown in Figures 1 and 2 only when the device is not in operation. Rather the device would be placed in the open condition for servicing activities such as clearing jams, cleaning, adjusting or replacing components. This can be readily done in this exemplary embodiment by a servicer as later described.

The deposit accepting device includes a document inlet opening 422. In the exemplary embodiment during operation the inlet opening is in communication with the outside of the housing of the automated banking machine. Documents received through the inlet opening travel along a transport path in the device. The transport path in the device further includes a document alignment area 424 in which documents are aligned to facilitate the processing thereof. The exemplary form of the unit further includes a document analysis area 426. The exemplary document analysis area includes scanning sensors and magnetic sensors for purposes of reading indicia from the documents.

The exemplary form of the device further includes an escrow area 428 along the transport path. In the escrow area documents that have been received are stored pending determination to either accept the documents or return them to the user. The exemplary deposit accepting device further includes a storage area 430 which operates to store documents that have been accepted for deposit within the deposit accepting device. Of course it should be understood that this structure is exemplary of arrangements that may be used.

In the exemplary embodiment documents are received through the opening and the presence of a document is sensed by at least one sensor 432. Sensing a document at the opening at an appropriate time during ATM operation (such as at a time when a user indicates through an input device of the machine that they wish to input a document) causes at least one processor to operate so as to control a gate 434. The processor operates upon sensing the document to cause the gate to move from the closed position to the open position. This is accomplished in the exemplary embodiment by a drive moving an actuator member 436 as shown in Figure 1. The actuator member 436 includes a cam slot 438 which causes corresponding movement of the gate 434 to the desired position. In some embodiments the at least one sensor 432 or other sensor in the device is operative to sense properties that would indicate whether the document being inserted is a double or other multiple document. At least one processor in the ATM may operate in accordance with its programming to not accept multiple documents and to cause the ATM to provide at least one output to advise the user to insert a single document.

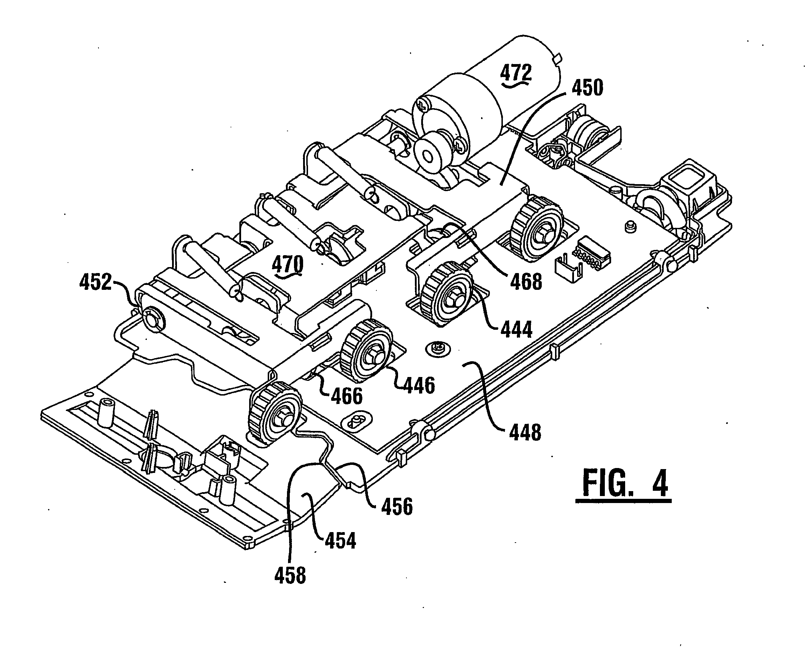

Responsive to the sensing of the document and other conditions as determined by at least one processor, a first transport 440 operates to move the document into the document alignment area. In the exemplary embodiment the document is moved in engaged relation between a belt flight 442 and rollers 444. As best shown in Figures 1 and 4, rollers 444 extend in openings 446 in an upper platen 448 to engage or at least move in very close proximity to belt flight 442. As shown in Figure 4, rollers 444 are mounted on a movable carriage 450. Carriage 450 is movable rotationally about a shaft 452. Movement of the carriage 450 enables selectively positioning of the rollers 444 to be in proximity to the surface of belt flight 442 or to be disposed away therefrom for reasons that are later discussed. After the document is sensed as having moved into the device the processor operates to cause the gate to be closed. Alternatively if a user has provided inputs through input devices on the machine indicating that they will be depositing more documents in the machine, the gate may remain open until the last document is deposited.

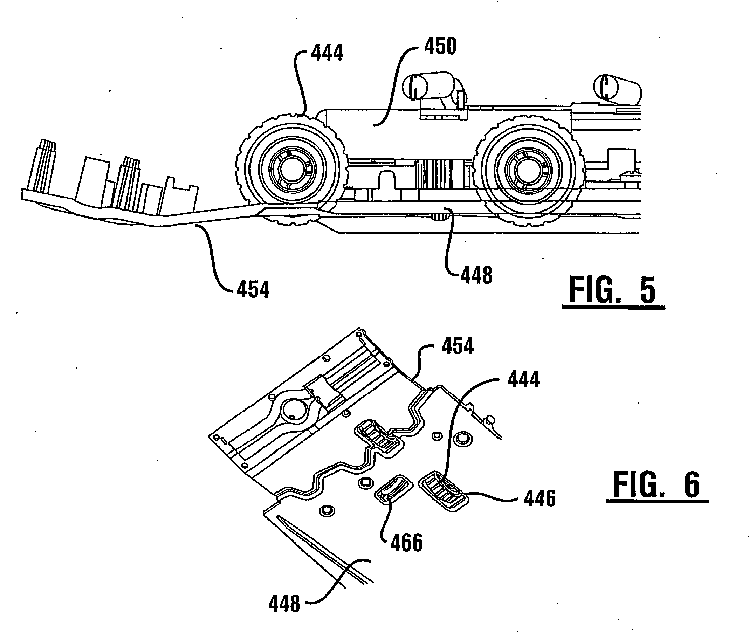

As shown in Figure 4 through 6, platen 448 in the operative position is in adjacent relation with a lead in guide 454. Guide portion 454 and platen 448 include corresponding contoured edges 456, 458. The contoured edges of the exemplary embodiment are of a toothed contoured configuration. This configuration is used in the exemplary embodiment to reduce the risk that documents will become caught at the adjacent edges of the platen and the guide. The toothed contoured configuration of the adjacent surfaces helps to minimize the risk that documents catch or are folded or damaged as they pass the adjacent surfaces. Of course it should be understood that this approach is exemplary and in other embodiments other approaches may be used.

In the exemplary embodiment the document alignment area includes transverse transport rolls 460 and 462. The transverse transport rolls extend through apertures in the platen 464 that supports belt flight 442. The transverse transport rolls of the exemplary embodiment are configured to have axially tapered surfaces extending in each longitudinal direction from the radially outermost extending portion of the roll so as to minimize the risks of documents being caught by a surface thereof. In alternative embodiments transverse transport rolls may have simple or compound curved surfaces to minimize the risk of catching transversely moving documents, which configurations shall also be referred to as tapered for purposes of this disclosure. In the exemplary embodiment the upper surface of the transverse transport rolls are generally at about the same level as the upper surface of belt flight 442. In addition each of the transverse transport rolls are in operative connection with a drive device. The drive device of the exemplary embodiment enables the transverse transport rolls to move independently for purposes of aligning documents as later discussed.

In supporting connection with platen 448 are a pair of transverse follower rolls 466 and 468. The transverse follower rolls each extend in a corresponding opening in the platen 448. Transverse follower roll 466 generally corresponds to the position of transverse transport roll 460. Likewise transverse follower roll 468 corresponds to the position of transverse transport roll 462. As shown in Figure 4, rolls 466 and 468 are supported on a movable carriage 470. Carriage 470 is rotatably movable about shaft 452. A drive 472 is selectively operative responsive to operation of one or more processors in the banking machine to cause the movement of carriage 470 and carriage 450. As a result, drive 472 of the exemplary embodiment is selectively operative to dispose rollers 444 adjacent to belt flight 442 or dispose the rollers therefrom. Likewise drive 472 is selectively operative to place transverse follower rolls 466 and 468 in adjacent relation with transverse transport rolls 460 and 462. These features are useful for purposes of aligning documents as will be later discussed. Of course this approach to a transverse transport for documents is exemplary and in other embodiments other approaches may be used.

The document alignment area 424 further includes a plurality of alignment sensors 474. In the exemplary embodiment non-contact sensors are used, which can sense the document without having to have any portion of the sensor contact the document. The exemplary alignment area includes three alignment sensors that are disposed from one another along the transport direction of belt flight 442. In the exemplary embodiment one sensor is aligned transversely with each of rolls 460 and 462 and a third sensor is positioned intermediate of the other two sensors. The alignment sensors of the exemplary embodiment are radiation type and include an emitter and a receiver. The sensors sense the documents that move adjacent thereto by detecting the level of radiation from the emitter that reaches the receiver. It should be understood that although three alignment sensors are used in the exemplary embodiment, other embodiments may include greater or lesser numbers of such sensors. Further while the alignment sensors are aligned along the direction of document transport in the exemplary embodiment, in other embodiments other sensor arrangements may be used such as a matrix of sensors, a plurality of transversely disposed sensors or other suitable arrangement.

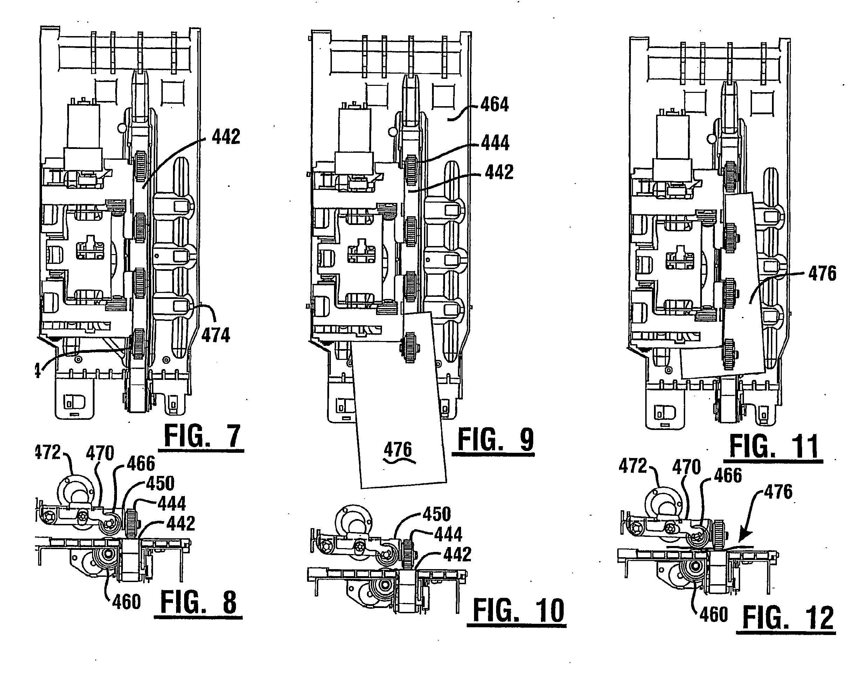

The operation of the document alignment area will now be described with reference to Figures 8 through 18. In the exemplary embodiment when a document is sensed entering the device, carriage 450 which is controlled through the drive 472 is positioned such that rollers 444 are positioned in adjacent relation to belt flight 442. This position is shown in Figure 8. In this document receiving position carriage 470 is moved such that the transverse follower rolls 466 and 468 are disposed away from the transverse transport rolls 460 and 462.

In response to sensing a document 476 being positioned in the inlet opening 422 and other appropriate conditions, the at least one processor is operative to cause the first transport 440 to move belt flight 442. If a double or other multiple document is sensed the first transport may not run or may run and then return the document to the user as previously discussed. Moving belt flight 442 inward causes the first document to be moved and engaged with the transport in sandwiched position between the rollers 444 and the belt flight as shown in Figure 9. In this position the transverse transport and transverse follower rolls are disposed away from one another so that the document 476 can move in engagement with the first transport into the document alignment area. The tapered surfaces of the transverse transport rolls 460,462 facilitate the document moving past the rolls without snagging. It should also be noted that projections on the surface of platen 464 operate to help to move the document by minimizing the risk of the document snagging on various component features. Further the projections on the platen help to minimize the effects of surface tension that might otherwise resist document movement and/or cause damage to the document. Of course these approaches are exemplary, and other embodiments may employ other approaches.

Position sensors for documents are included in the document alignment area and such sensors are operative to sense when the document has moved sufficiently into the document alignment area so that the document can be aligned. Such sensors may be of the radiation type or other suitable types. When the document 476 has moved sufficiently inward, the first transport is stopped. In the stopped position of the transport, the drive 472 operates to move carriage 470 as shown in Figure 12. This causes the transverse transport and follower rolls to move adjacent with the document 476 positioned therebetween so as to engage the document.

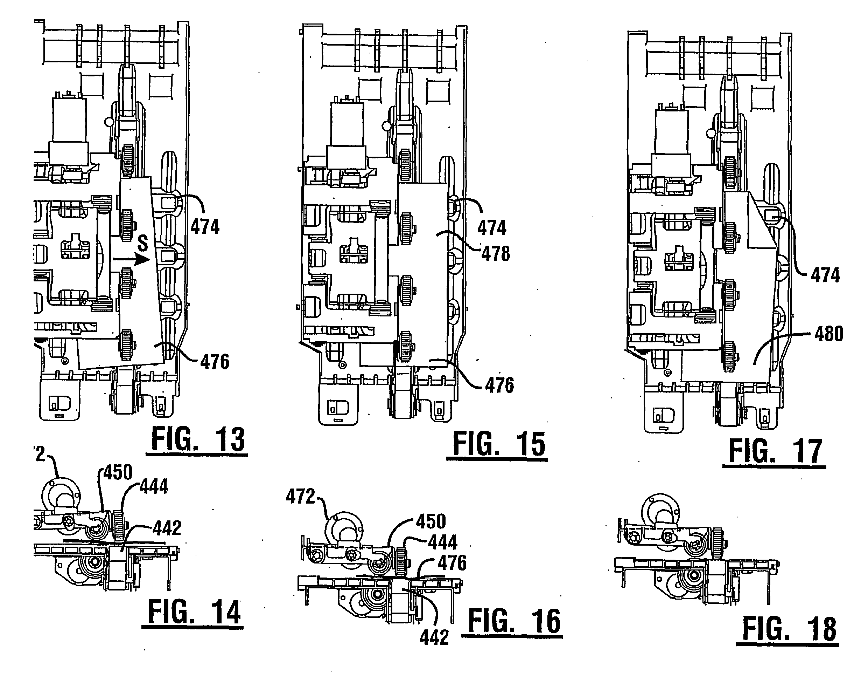

Thereafter as shown in Figures 13 and 14 the drive 472 is operative to move the carriage 450. This causes the rollers 444 to be disposed from belt flight 442 which disengages this transport with respect to the document. Thereafter the one or more drives which are operative to move the transverse transport rolls, operate responsive to at least one processor so as to move document 476 in a direction transverse to the direction of prior movement by belt flight 442 as well as to deskew the document. As shown in Figure 15, the document 476 is moved sideways until a longitudinal edge 478 is aligned with the alignment sensors 474. In the exemplary embodiment the alignment sensors 474 provide a virtual wall against which to align the longitudinal edge of the document. The sensing of the document by the alignment sensors 474 enables precise positioning of the document and aligning it in a desired position which facilitates later reading indicia therefrom. In an exemplary embodiment in which the documents are checks, the precise alignment of the longitudinal edge enables positioning of the document and its micr line thereon so as to be in position to be read by a read head as later discussed. Of course in other embodiments other approaches may be used.

In some exemplary embodiments the alignment sensors are in operative connection with one or more processors so that the transports are controlled responsive to the sensors sensing a degree of reduction in radiation at a receiver from an associated emitter of a sensor as the document moves toward a blocking position relative to the sensor. The exemplary embodiment may be configured such that a drive operating the transverse transport roll may cease to further move the sheet transversely when the alignment sensor which is transversely aligned with the transport roll senses a certain reduction in the amount of radiation reaching the sensor from the emitter. Thereafter the other drive operating the other transverse transport roll may continue to operate until the alignment sensor that corresponds to that transport roll senses a similar degree of reduction. In this way the processor operating the independently controlled transverse transport rolls cause the longitudinal edge of the document to be aligned with the virtual wall produced through use of the sensors.

In alternative embodiments the apparatus may operate in accordance with its programming to cause the respective transverse transport rolls to move the document transversely such that a reduction in radiation from the respective emitter is sensed reaching the corresponding receiver until no further reduction occurs. This corresponds to a condition where the document fully covers the corresponding receiver. Thereafter the respective drive for the transverse transport roll may be reversed in direction to a desired level such as, for example, fifty percent of the total reduction which would indicate that the transverse edge is positioned to cover approximately fifty percent of the receiver. In this way this alternative embodiment may be able to align documents that have relatively high radiation transmissivity or transmissivity that is variable depending on the area of the document being sensed by the sensor. Alternatively a transverse linear array of sensors, such as CCDs may be used to determine the transverse position of a particular portion of the edge of the sheet. A plurality of spaced arrays may be used to sense the position of the sheet. Of course these approaches are exemplary and in other embodiments other approaches may be used.

Once the document has been aligned and moved to the position shown in Figure 15, the drive 472 operates to move the carriage 450 such that the rollers 444 are again moved adjacent to belt flight 442. Thereafter the drive moves the carriage 470 so as to dispose the transverse follower rolls 466 and 468 away from the transverse transport rolls. This position is shown in Figure 8. Thereafter the now aligned document can be further moved along the transport path through movement of the first transport out of the document alignment area of the device to the document analysis area.

Figures 17 and 18 disclose an operational feature of the exemplary embodiment where a document 480 has a folded edge. In this exemplary situation the folded edge is configured so that the alignment sensor 474 which corresponds to transverse transport roll 462 cannot sense a longitudinal edge of the document until the document is unduly skewed. However, in this situation the middle alignment sensor will be operative to sense the middle portion of the longitudinal edge as will the alignment sensor that corresponds to transverse transport roll 460 before sensor 474 senses the edge of the document. In the exemplary embodiment the at least one processor that controls the operation of the drives for the transverse transport rolls is operative to control movement of the document transversely when the middle alignment sensor senses the edge of the document even through one of the end sensors has not. This is true even for a folded document or a document that has been torn. The at least one processor controls each transverse roll to move the document transversely until two of the three sensors detect and edge of the document in the desired aligned position. In this way even such an irregular document is generally accurately aligned in the longitudinal direction from the transport.

It should be understood that the exemplary embodiment uses radiation type sensors for purposes of aligning the document in the alignment section. In other embodiments other types of sensors such as sonic sensors, inductance sensors, air pressure sensors or other suitable sensors or combinations thereof, may be used.

Once the document has been aligned in the document alignment area of the transport path, the deposit accepting device operates responsive to the programming associated with one or more processors, to cause the document to be moved along the transport path by the first transport into the document analysis area. In the exemplary embodiment the document analysis area includes at least one magnetic sensing device which comprises the magnetic read head 482. Magnetic read head 482 is in supporting connection with platen 448 and in the exemplary embodiment is movable relative thereto. The alignment of the document in the document alignment area is operative in the exemplary embodiment to place the micr line on the check in corresponding relation with the magnetic read head. Thus as the document is moved by the first transport into the document analysis area, the micr line data can be read by the magnetic read head. Of course in some alternative embodiments micr or other magnetic indicia may be read through other magnetic sensing elements such as the type later discussed, or optically, in the manner shown in U.S. Patent No. 6,474,548, for example.

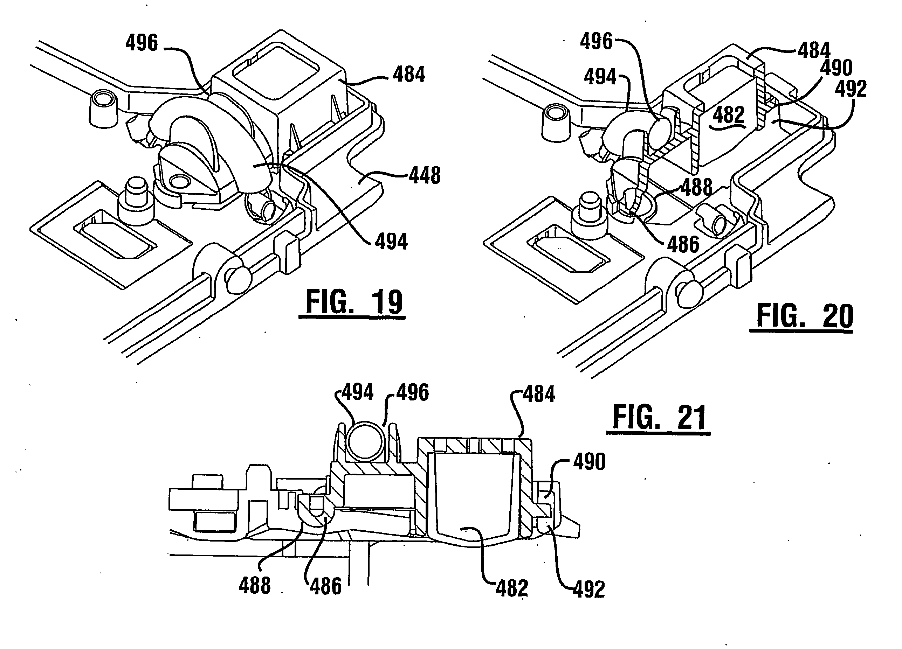

Figures 19 through 21 show an exemplary form of the movable mounting for the magnetic read head 482. In the exemplary embodiment the magnetic read head is positioned in a retainer 484. Retainer 484 includes a first projection 486 that extends in and is movable in an aperture 488. Retainer 484 also includes a projection 490 which is movable in an aperture 492. A tension spring 494 extends through a saddle area 496 of the housing 484. The saddle area includes two projections which accept the spring 494 therebetween. This exemplary mounting for the magnetic read head provides for the head to float such that it can maintain engagement with documents that are moved adjacent thereto. However, the movable character of the mounting which provides both for angular and vertical movement of the read head reduces risk of snagging documents as the documents move past the read head. Further the biased spring mounting is readily disengaged and enables readily replacing the magnetic read head in situations where that is required. Of course this approach is exemplary and in other embodiments other approaches may be used.

The exemplary document analysis area includes in addition to the read head a magnetic sensing element 498. The magnetic sensing element in some exemplary embodiments may read magnetic features across the document as the document is moved in the document analysis area. In some embodiments the magnetic reading device may be operative to read numerous magnetic features or lines so as to facilitate the magnetic profile of the document as discussed herein. In some embodiments the magnetic sensing element may sense areas of the document in discrete elements which provide a relatively complete magnetic profile of the document or portions thereof. In some embodiments the magnetic sensing capabilities may be sufficient so that a separate dedicated read head for reading the micr line of checks is not required. Of course these approaches are exemplary and may vary depending on the type of documents which are being analyzed through the system.

The exemplary document analysis area further includes a first scanning sensor 500 and a second scanning sensor 502. The scanning sensors are operative to sense optical indicia on opposed sides of the document. The scanning sensors in combination with at least one processor are operative to produce data which corresponds to a visual image of each side of the document. This enables analysis of visual indicia on documents through operation of at least one processor in the ATM. In the case of checks and other instruments the scanning sensors also enable capturing data so as to produce data which corresponds to image of a check which may be used for processing an image as a substitute check, and/or other functions.

In some embodiments, the data corresponding to images of the documents may be used by the ATM to provide outputs to a user. For example, an image of a check may be output through a display screen of the ATM so a user may be assured that the ATM has captured the image data. In some cases at least one processor in the ATM may apply digital watermarks or other features in the data to minimize the risk of tampering. In some embodiments at least one processor may operate in accordance with its programming to indicate through visual outputs to a user with the image that security features have been applied to the image data. This may include outputs in the form of words and/or symbols which indicate a security feature has been applied. This helps to assure a user that the ATM operates in a secure manner in processing the accepted check. Of course, this approach is exemplary of things that may be done in some embodiments.

In alternative embodiments the programming of one or more processors associated with the ATM may enable the scanning sensors, magnetic sensors and other sensing elements to gather data which is usable to analyze other types of documents. Other types of sensing elements may include, for example, UV, IR, RFID, fluorescence, RF and other sensors that are capable of sensing properties associated with document. Documents may include for example receipts, certificates, currency, vouchers, travelers checks, tickets or other document types. The data gathered from the sensors in the analysis area may be processed for purposes of determining the genuineness of such items and/or the type and character thereof. Of course the nature of the sensors included in the analysis area may vary depending on the type of documents to be processed by the device. Also some embodiments may operate so that if a micr line or other magnetic characters on the document are not aligned with the magnetic read head, the document can nonetheless be analyzed and processed using data from other sensors.

It should also be noted that documents are moved in the document analysis area through engagement with a plurality of driving rolls 504. The driving rolls 504 operate in response to one or more drives that are controlled responsive to operation of one or more processors in the ATM. The drives are operative to move documents into proximity with and past the sensors so as to facilitate the reading of indicia thereon. The document may be moved in one or more directions to facilitate the reading and analysis thereof.

Once a document has been moved through the document analysis area, the document passes along the transport path into escrow area 428. Escrow area 428 includes a third transport 506. Transport 506 includes an upper belt flight 508. The plurality of cooperating rollers 510 supported through platen 449 are positioned adjacent to belt flight 508 in the operative position. Documents entering the escrow area are moved in engagement with belt flight 508 and intermediate to belt flight and the rollers.

In the exemplary embodiment documents that have been passed through the document analysis area are moved in the escrow area where the documents may be stopped for a period of time during which decisions are made concerning whether to accept the document. This may include for example, making a determination through operation of the ATM or other connected systems concerning whether to accept an input check. If it is determined that the check should not be accepted, the direction of the transports are reversed and the check is moved from the escrow area through the document analysis area, the document alignment area and back out of the ATM to the user. Alternatively if the decision is made to accept the document into the ATM, the document is moved in a manner later discussed from the escrow area to the document storage area of the device.

In some exemplary embodiments the escrow area may be sufficiently large to hold several checks or other documents therein. In this way a user who is conducting a transaction involving numerous checks may have all those checks accepted in the machine, but the programming of the machine may enable readily returning all those checks if the user elects to do so or if any one or more of the documents is determined to be unacceptable to the machine. Alternatively or in addition, storage devices such as belt storage mechanisms, transports or other escrow devices may be incorporated into the transport path of a deposit accepting device so that more numerous documents may be stored therein and returned to the user in the event that a transaction is not authorized to proceed. Of course these approaches are exemplary.

It should be noted that the exemplary escrow area includes a lower platen with a plurality of longitudinal projections which extend thereon. The longitudinal projections facilitate movement of the document and reduce surface tension so as to reduce the risk of the document being damaged.

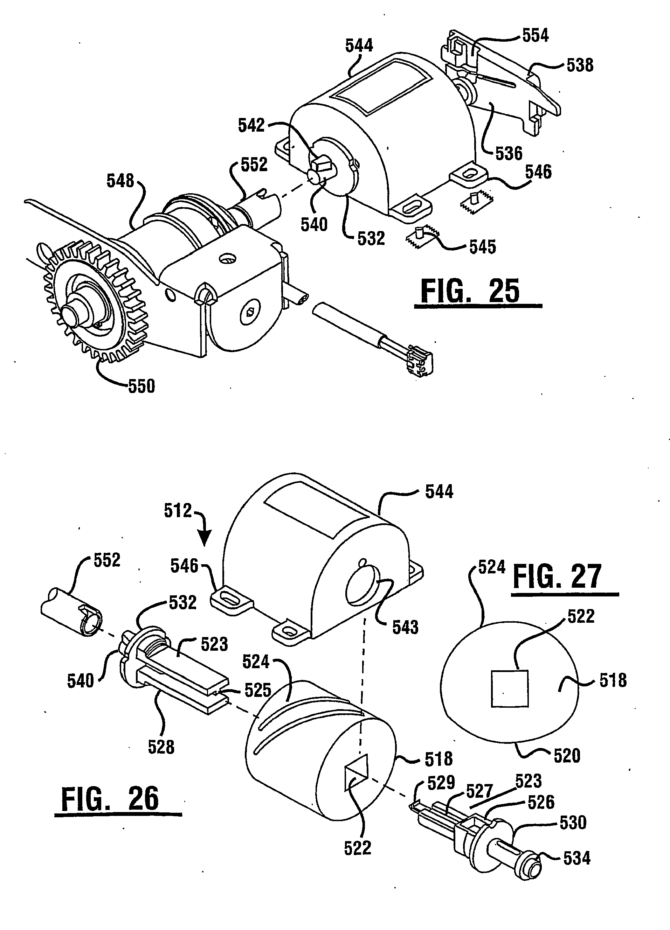

In the exemplary embodiment the escrow area further includes a stamper printer 512. In the exemplary embodiment the stamper printer is supported through platen 449 and includes an ink roll type printer which is described in more detail in Figures 25 through 27. The escrow area further includes a backing roll 514 which operates to assure that documents move in proximity to the stamper printer so that indicia can be printed thereon.

The exemplary form of the stamper printer is shown in greater detail in Figures 25 through 27. The exemplary printer includes an eccentric ink bearing roll 518 shown in Figure 27. The eccentric shape of the ink bearing roll in cross section includes a flattened area 520 which is disposed radially closer to a rectangular opening 522 which extends in the roll, than a printing area 524 which is angularly disposed and in opposed relation thereof. The flattened area is generally positioned adjacent to documents when documents are moved through the escrow area and printing is not to be conducted thereon by the stamper printer. In the exemplary embodiment the ink roll 518 is encapsulated in plastic and is bounded by a plastic coating or cover about its circumference. Apertures or openings are cut therethrough in the desired design that is to be printed on the documents. As can be appreciated, the apertures which are cut in the plastic which encapsulates the outer surface of the ink bearing roll enables the ink to be transferred from the ink holding roll material underlying the plastic coating, to documents in the shape of the apertures. For example in the embodiment shown a pair of angled lines are printed on documents by the stamper printer. Of course this approach is exemplary and in other embodiments other types of inking mechanisms and/or designs may be used.

In the exemplary embodiment the ink roll 518 is supported on a first shaft portion 526 and a second shaft portion 528. The shaft portions include rectangular projections that are generally rectangular in profile 523, that extend in the opening 522 of the ink roll. The shaft portions include flanged portions 530 and 532 that are disposed from the radial edges of the roll. Shaft portions 526 and 528 include an interengaging projection 525 and access 527, as well as a tab 529 and recess that engage and serve as a catch, which are operative to engage and be held together so as to support the roll.

Shaft portion 526 includes an annular projection 534. Annular projection 534 is adapted to engage in a recess which is alternatively referred to as a slot (not separately shown) which extends generally vertically in a biasing tab 536 as shown in Figure 25. Biasing tab 536 is operative to accept the projection in nested relation and is operative to provide an axial biasing force against shaft portion 526 when the first shaft portion is positioned therein. This arrangement enables holding the shaft portion in engaged relation with the biasing tab. However, when it is desired to change the stamper printer and/or the ink roll therein, the biasing tab may be moved such that the annular projection may be removed from the interengaging slot by moving the projection 534 upward in the recess so as to facilitate removal of the printer and ink roll. The biasing tab is supported on a bracket 538 that is in supporting connection with the platen which overlies the escrow area.

Second shaft portion 528 includes an annular projection 540. Projection 540 includes on the periphery thereof an angled radially outward extending projection 542. Projection 542 has a particular contour which is angled such that the transverse width of the projection increases with proximity to the flange portion 542. This configuration is helpful in providing a secure method for moving the ink roll but also facilitates changing the ink roll and stamper printer when desired.

In the exemplary embodiment the ink roll 518 is housed within a housing 544. Housing 544 is open at the underside thereof such that the printing area 524 can extend therefrom to engage a document from the escrow area. Housing 544 also includes two pairs of outward extending ears 546. Ears 546 include apertures therein that accept housing positioning projections 545 on the associated mounting surface of the device and are operative to more precisely position the housing and the ink roll on the supporting platen and to facilitate proper positioning when a new ink roll assembly is installed. Housing 544 also includes apertures 543 through which the shaft portions extend. A flange portion is positioned adjacent to each aperture.

In the exemplary embodiment shaft portion 528 is driven through a clutch mechanism 548. Clutch mechanism 548 of the exemplary embodiment is a wrap spring clutch type mechanism which is selectively actuatable through electrical signals. The clutch is driven from a drive through a gear 550. The clutch 548 outputs rotational movement through a coupling 552. Coupling 552 includes the annular recess that corresponds to projection 540 and a radial recess which corresponds in shape to projection 542. Thus in the exemplary embodiment the force of the biasing tab enables the coupling 552 to solidly engage shaft portion 528.

During operation gear 550 which is operatively connected to a drive provides a mechanical input to the clutch 548. However, the ink roll generally does not rotate. Transport 506 is operative to move a document in the transport in the escrow area responsive to signals from a processor. Sensors such as radiation sensors in the escrow area are operative to indicate one or more positions of the document to the processor. When the document is to be marked with the stamper printer it is positioned adjacent to the ink roll by operation of a processor controlling the transport in the escrow area. A signal is sent responsive to the processor to the clutch 548. This signal is operative to engage the coupling 552 which causes the shaft portions 528 and 526 to rotate the ink roll 518. As the ink roll rotates the printing area 524 engages the surface of the document causing ink markings to be placed thereon. The ink roll rotates in coordination with movement of the document. The clutch is operative to cause the coupling to carry out one rotation such that after the document has been marked, the printing area is again disposed upward within the housing. The flattened portion 520 of the ink roll is again disposed in its initial position facing the document. Thus documents are enabled to pass the stamper printer 512 without having any unwanted markings thereon or without being snagged by the surfaces thereof.

It should be understood that when it is desired to change the stamper printer ink roll because the ink thereon has become depleted or alternatively because a different type of marking is desired, this may be readily accomplished. A servicer does this by deforming or otherwise moving the biasing tab 536 and moving the shaft portion 526 upward such that the annular projection 534 no longer extends in the slot in the biasing tab. This also enables projection 534 to be moved upward and out of a stationary slot 554 in the bracket 538. As the annular projection 534 is moved in this manner the annular projection 540 and radial projection 542 are enabled to be removed from the corresponding recesses in the coupling 552. This enables the housing 544 to be moved such that the ears 546 on the housing can be separated from the positioning projections which help to assure the proper positioning of the ink roll when the housing is in the operative position. Thereafter a new housing shaft and ink roll assembly can be installed. This may be accomplished by reengaging the projections 540 and 542 with the coupling 552 and engaging the projection 534 in the slot of biasing tab 536. During such positioning the positioning projections are also extended in the ears 546 of the housing, to locate the housing and reliably position the ink roll.

It should further be understood that although only one ink roll is shown in the exemplary embodiment, alternative embodiments may include multiple ink rolls or multiple stamper printers which operate to print indicia on checks. Such arrangements may be used for purposes of printing varied types of information on various types of documents. For example in some situations it may be desirable to return a document that has been processed through operation of the device to the user. In such circumstances a stamper printer may print appropriate indicia on the document such as a "void" stamp or other appropriate marking. Of course the type of printing that is conducted may vary as is appropriate for purposes of the particular type of document that is being processed. In other embodiments alternative approaches may be used.

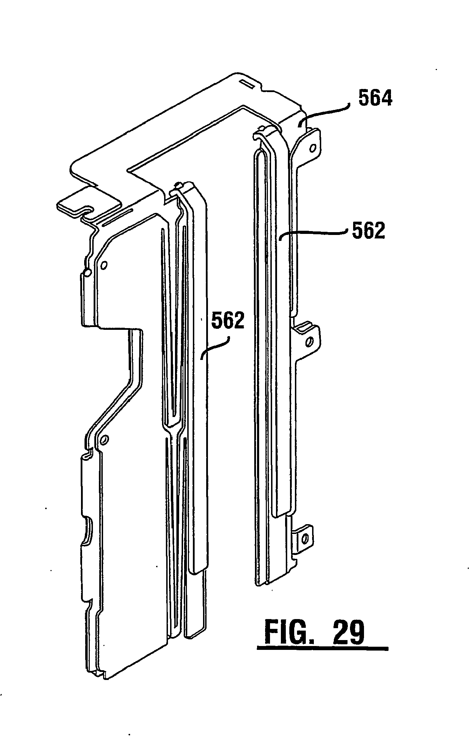

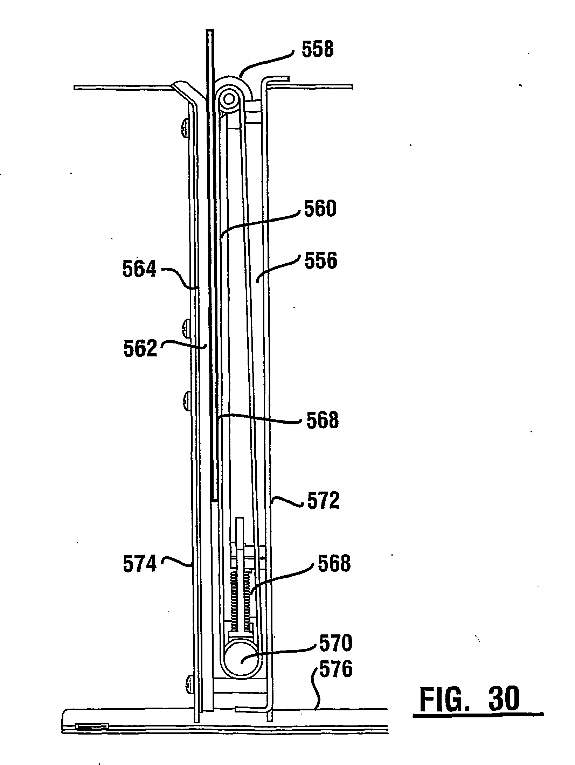

In the exemplary embodiment a document that is to be moved from the escrow area can be more permanently stored in the machine by moving the document to a storage area 430. Documents are moved from the escrow area toward the storage area by moving the document in engagement with belt flight 508 so that the document engages a curved deflector 554. Deflector 554 causes the document to engage a vertical transport 556 that extends in the storage area 430. As best shown in Figure 30 vertical transport 556 includes two continuous belts that are driven by a drive 558. The transport 556 includes a pair of disposed belts, each of which has a belt flight 560. Each belt flight 560 extends in generally opposed relation of a corresponding rail 562 of a vertical guide 564. As shown in Figure 29 guide 564 of the exemplary embodiment is constructed so that the rails 562 are biased toward the belt flights by a resilient material. This helps to assure the document can be moved between the belt flights and the rails in sandwiched relation. Such a document 568 is shown moving between the rails and the belt flights in Figure 30.

It should also be noted that in the exemplary embodiment the drive 558 includes a spring biasing mechanism 568. The biasing mechanism acts on lower rolls 570 to assure proper tension is maintained in the belt flights 560.

Further in the exemplary embodiment the transport belts are housed within a housing which includes a pair of spaced back walls 572. As later discussed, back walls 572 serve as support surfaces for stacks of documents that may be stored in a first section or location of the storage area of the device. Similarly guide 564 includes a pair of transversely disposed wall surfaces 574. Wall surfaces 574 provide support for a stack of documents disposed in a second section or location of the storage area. Also as shown in Figure 30, the vertical transport 556 moves documents to adjacent a lower surface 576 which bounds the interior of the storage area. Document sensing devices are provided along the path of the vertical transport so that the drive 558 can be stopped through operation of at least one processor once the document has reached the lower surface. This helps to assure that documents are not damaged by movement in the drive. Of course these approaches are exemplary and in other embodiments other approaches may be used.

In the exemplary embodiment when at least some documents are moved from the escrow area into the vertical transport, the device operates to print indicia thereon. This may be indicia of various types as described herein, as would be appropriate for the types of documents being processed. In the exemplary embodiment printing on the documents is carried out through operation of an inkjet printer 578. The inkjet printer includes a removably mounted printhead that is adjacent to documents as they are moved in the vertical transport portion of the sheet path. The inkjet printer includes nozzles which are operative to selectively expel ink therefrom toward the sheet path and shoot ink onto the adjacent surface of the document. The nozzles of the inkjet printer operate in accordance with the programming of a processor which is operative to drive the inkjet printer to expel ink selectively therefrom to produce various forms of characters on the documents as may be desired. For example in an exemplary embodiment the printer may be operative to print indica on checks so as to indicate transaction information and/or the cancellation of such checks. In the exemplary embodiment the print head is releasibly mounted through moveable members to enable ready installation and removal.

The exemplary embodiment further includes an ink catching mechanism 580 which is alternatively referred to herein as an ink catcher. In the exemplary embodiment the ink catching mechanism is operative to capture ink that may be discharged from the printhead at times when no document is present. This may occur for example if a document is misaligned in the transport or if the machine malfunctions so that it attempts printing when no document is present. Alternatively the inkjet printer may be operated responsive to at least one processor at times when documents are not present for purposes of conducting head cleaning activities or other appropriate activities for assuring the reliability of the inkjet printer. Further the exemplary embodiment of the ink catcher mechanism is operative to tend the printhead by wiping the nozzles so as to further facilitate reliable operation. Of course it should be understood that the exemplary ink catcher shown and described is only one of many ink catcher configurations that may be used.

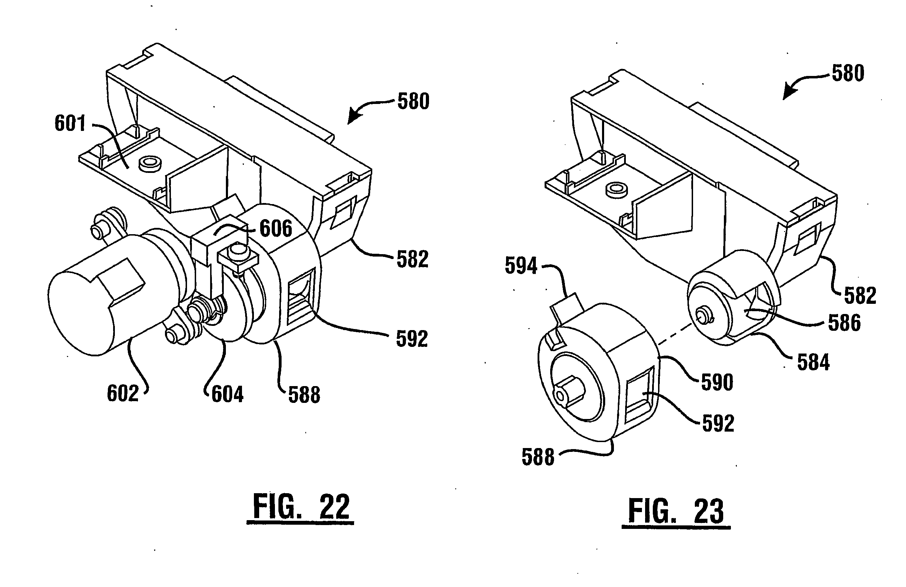

An exemplary form of the ink catching mechanism is shown in Figures 22 through 24. The ink catching mechanism includes an ink holding body 582 with an ink holding area therein. Body 582 has thereon an annular projecting portion 584. Projecting portion 584 has an opening 586 therein. Opening 586 of the projecting portion is in fluid communication with the ink holding interior area of the main portion of the body. Of course this body configuration is merely exemplary.

A head portion 588 is comprised of a body portion configured to extend in overlying relation of the projecting portion 584. Head portion 588 of the exemplary embodiment comprises a generally annular body member that includes a flattened area 590 which has an opening 592 therein. Head portion 588 also has in supporting connection therewith a resilient wiper member 594 extending radially outward therefrom in an area disposed angularly away from the opening 592.

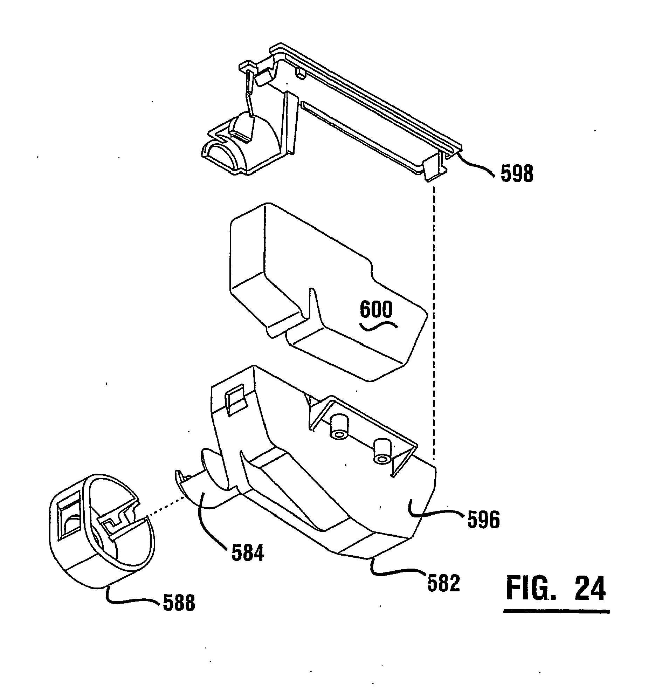

As shown in Figure 24 the exemplary embodiment of body 582 is of a generally clamshell construction and includes a lower portion 596 and an upper portion 598. The upper and lower portions fit together as shown to form the body, including the annular projecting portion. Also housed within the interior of the exemplary embodiment of the body is an ink absorbing member 600. The ink absorbing member is operative to absorb ink which passes into the interior of the body through opening 586. The body is releasibly mounted in the machine through a mounting portion 601 which accepts suitable fasteners or other holding devices.

In the operative condition the head portion 588 extends in overlying generally surrounding relation of the projecting portion 584. The head portion is enabled to be selectively rotated through operation of a drive 602 that is operatively connected therewith. A disk member 604 and sensor 606 are operative to sense at least one rotational position of the head portion 588.

In operation of the exemplary form of the device the head portion 588 is generally positioned as shown in Figure 22 with the opening 592 of the head portion in aligned relation with the opening 586 in the projecting portion of the body. The projecting portion extends within an interior area of the rotatable head portion. In this position ink expelled from the inkjet printhead which does not strike a document, passes into the interior of the body through the aligned openings. Thus for example if the programming of the machine calls for the machine to periodically conduct a head cleaning operation in which the nozzles of the inkjet printhead are fired, the ink can be transmitted through sheet path in the area of the transport where documents are normally present and into the body of the ink catcher mechanism. Thereafter or periodically in accordance with the programming of the machine, a processor in operative connection with the drive is operative to cause the drive 602 to rotate the head portion 588. Rotation of the head portion is operative to cause the flexible wiper member 594 to engage the print head and wipe over the openings of the inkjet nozzles. This avoids the buildup of ink which can prevent the efficient operation of the inkjet printer. Once the wiper has moved across the nozzles the head returns to the position so that excess ink is accepted within the body. This is done in the exemplary embodiment by having the head portion rotate in a first rotational direction about a full rotation. In this way the head portion rotates from the position where the openings in the head portion and projecting portion are aligned with the print head. The head portion is rotated so the openings are no longer aligned and the flexible wiper member engages the print head and wipes across the nozzles thereof. The head portion continues to rotate until the openings are again aligned.

In the exemplary embodiment the drive operates responsive to the at least one processor to rotate the head portion in the first rotational direction about 360 degrees and then stops. In other embodiments the drive may reverse direction and/or operate the head portion to undergo multiple rotations. In other embodiments the movable member may include multiple openings and wiper members and may move as appropriate based on the configuration thereof. In other embodiments the movable member may include multiple openings and wiper members and may move as appropriate based on the configuration thereof.

In some embodiments the at least one processor may operate the print head periodically to clean or test the print head, and may operate the ink catcher to wipe the nozzles only after such a cleaning or test. In some alternative embodiments wiping action may be done after every print head operation or after a set number of documents have been printed upon. Various approaches may be taken in various embodiments.

In exemplary embodiments suitable detectors are used to determine when the print head needs to be replaced. At least one processor in operative connection with the print head may operate to provide an indication when the print cartridge should be changed. Such an indication may be given remotely in some embodiments, by the machine sending at least one message to a remote computer. In the exemplary embodiment a servicer may readily remove an existing print cartridge such as by moving one or more fasteners, tabs, clips or other members. A replacement cartridge may then be installed, and secured in the machine by engaging it with the appropriate members. In the exemplary embodiment electrical contacts for the print head are positioned so that when the cartridge is in the operative position the necessary electrical connections for operating the print head are made. The new cartridge is installed with the print head thereof positioned in aligned relation with the opening in the head portion of the ink catcher so that ink from the print head will pass into the ink catcher and be held therein if there is no document in the sheet path between the print head and the ink catcher at the time ink is expelled therefrom.

In the exemplary embodiment after a new ink cartridge has been installed a servicer may test the operation of the printer. This is accomplished by providing appropriate inputs to the machine. A servicer moves a sheet into the sheet path. This may be done in some cases manually and in other cases by providing and moving a sheet in the sheet path through one or more transports. One or more inputs from the servicer to input devices of the machine causes the processor to operate the printer to expel ink from the print head toward the sheet path. If the sheet is present ink impacts the sheet to print thereon. In some cases the processor operates the print head to print an appropriate pattern such as one that tests that all the nozzles are working. In other embodiments other indicia may be printed. Of course if no sheet is present in the sheet path, the ink from the print head passes into the body of the ink catcher through the opening in the head portion. Of course this approach is exemplary, and in other embodiments other approaches and processes may be used.

In some embodiments after printing is conducted the machine may operate to wipe the nozzles of the print head. This may be done in response to the programming associated with the processor and/or in response to an input from a servicer. In such a situation the drive operates to rotate the head portion 588 about the projecting portion 584 so that the flexible wiper member engages the print head. In the exemplary embodiment the wiper member wipes across the print head as the head portion of the ink catcher makes about one rotation from its initial position. The head portion rotates responsive to the drive until the head portion is again sensed as having the opening therein aligned with the print head. This is sensed by the sensor 606 sensing the rotational position of the disk member 604. In response to sensing that one head portion is in the position for capturing ink from the print head, the processor is operative to cause the drive to cease operation. Of course these approaches are exemplary and in other embodiments other approaches may be used.

In an exemplary embodiment when the ink catching mechanism has become filled with ink it is possible to replace the body by disengaging one or more fasteners that hold it in position and install a new one in the operative position. Alternatively in some embodiments the body may be opened and the ink absorbing member 600 removed and replaced with a new member.

In the exemplary embodiment the body is disengaged from the machine by disengaging the one or more fasteners or other devices that hold the mounting portion 601 to the adjacent housing structure of the document accepting device. Once this is done the body 580 is moved so that the projecting portion 584 no longer extends within the interior area of the movable head portion 588. Once this is done the body can be discarded. Alternatively, the body may be opened, the ink absorbing member 600 removed, a new ink absorbing member installed and the body again closed.

A new body or one with a new ink absorbing member is installed by extending the projection portion 584 thereof within the interior area of the head portion 588. The body is then fastened in place through the mounting portion. In response to appropriate inputs to an input device of the machine from a servicer, the processor operates to cause the drive 602 to rotate the head portion 588. The processor may operate in accordance with its programming to rotate the head portion 588 only as necessary to align the opening 592 with the print head. Alternatively the processor may operate the drive to make one or more rotations before stopping the rotation of the head portion. In some embodiments the processor may operate the printer to test its operation as previously discussed, and may then rotate the head portion to wipe the nozzles of the print head. Of course these approaches are exemplary and in other embodiments other approaches may be used.

Thus as can be appreciated the exemplary embodiment of the ink catching mechanism provides an effective way for the printer to be operated so as to avoid the deposition of excess ink within the ATM as well as to enable the print nozzles to be maintained in a suitable operating condition so that printing may be reliably conducted.

In the exemplary embodiment documents such as checks are moved into the storage area 430 through the vertical transport 556. Such documents are held initially between the rails 562 of the guide 564 and the belt flights 560 of the vertical transport. In the exemplary embodiment such documents may be selectively stored in one of two available sections (alternatively referred to herein as locations) of the storage area. These include a first storage location 608 positioned on a first side of the vertical transport and a second storage location 610 positioned on an opposed transverse side of the vertical transport. Selective positioning of documents into the storage locations is accomplished through use of a movable plunger member 612 which operates responsive to one or more processors to disengage documents from the vertical transport and move the documents into either the first storage location or second storage location of the storage area.

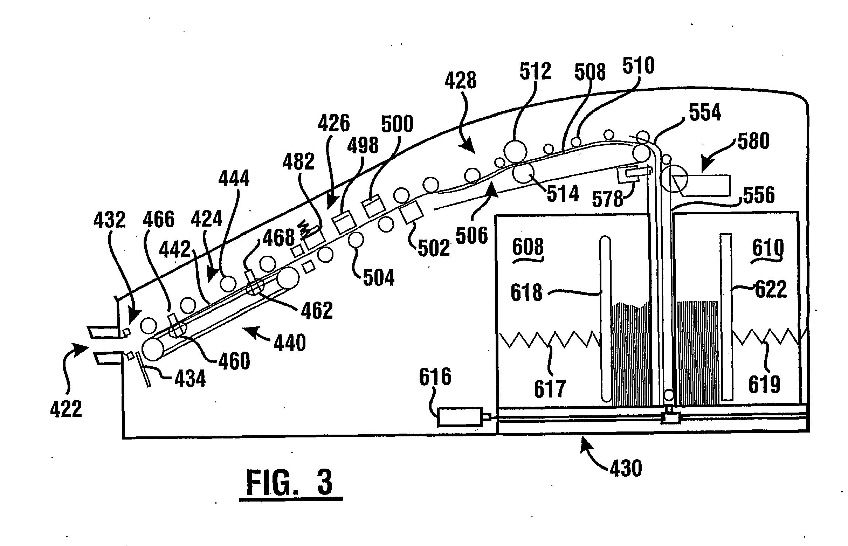

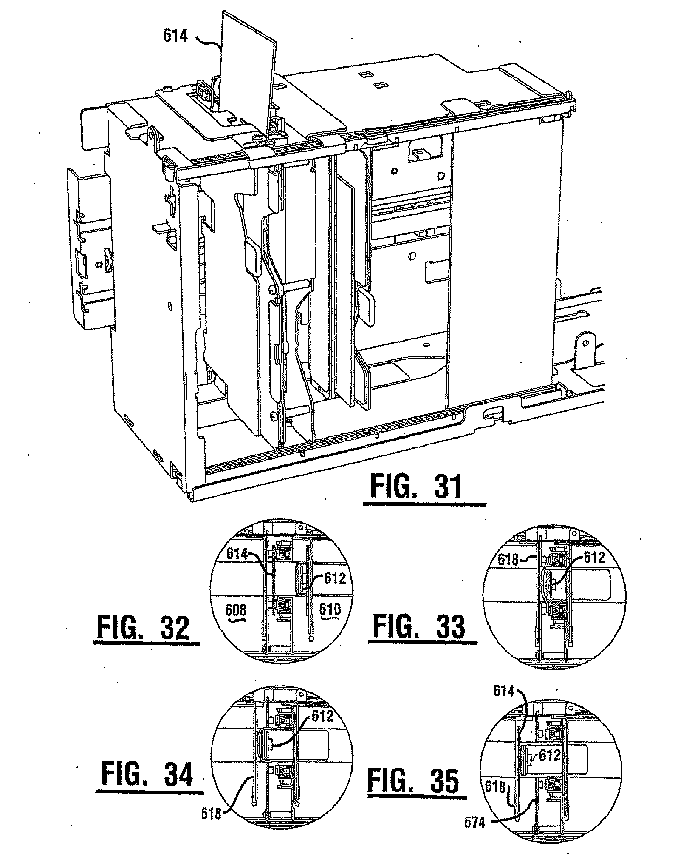

Figures 31 through 35 show the operation of the exemplary plunger member to move a document 614 into storage location 608. As shown in Figure 32 when the document 614 has moved downward into the storage area, the plunger 612 has been positioned to the right of the document as shown in storage location 610. In the exemplary embodiment movement of the plunger member is accomplished through use of a suitable drive and movement mechanism such as a rack drive, worm drive, tape drive or other suitable movement device. Such a drive is represented schematically by drive 616 in Figure 3.

Once the document has been moved to the proper position and the vertical transport is stopped, the plunger 612 moves from the position shown in Figure 32 to the left so as to engage the document. Such engagement with the document deforms the contour of the document as shown and begins to pull the document transversely away from engagement with the belt flights and the guide rails. A spring biased backing plate 618 which may have additional documents in supporting connection therewith, is moved by the action of the plunger as shown in Figures 33 and 34. Backing plate 618 is biased by a spring or other suitable device so that documents in supporting connection with the backing plate are generally trapped between the backing plate and the wall surfaces 574 of the guide.

As represented in Figures 34 and 35 as the plunger 612 moved further toward the storage location 608, the document disengages from the rails and belts so that the document is eventually held in supported relation with the backing plate 618 by the plunger. Once the document 614 has reached this position as shown in Figure 35 the plunger may be moved again to the right as shown such that the document 614 is integrated into the document stack supported on backing plate 618. Further as the plunger 612 returns toward its original position, the documents supported on the backing plate are held in sandwiched relation between the wall surfaces 574 of the guide and the backing plate. Thus the document 614 which was moved into the storage area has been selectively moved through operation of the plunger into the storage location 608.

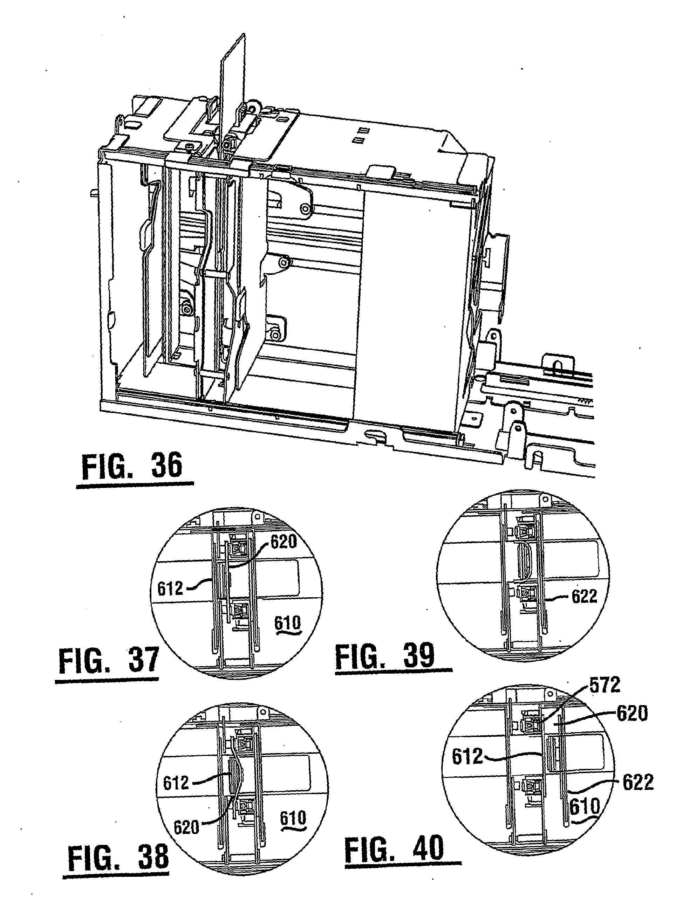

Figures 36 through 40 show operation of the plunger member to store a document in storage location 610. As shown in Figure 37 a document 620 is moved into the vertical transport and because this document is to be stored in storage location 610 the plunger member 612 is positioned responsive to operation of the processor to the left of the document as shown. As shown in Figures 38 and 39 movement of the plunger member 612 toward the right as shown disengages the document from the transport and brings it into supporting connection with a spring loaded backing plate 622. Backing plate 622 is biased by a spring or other suitable biasing mechanism toward the left as shown in Figures 39 and 40.

Movement of the plunger 612 to the extent shown in Figure 40 causes the document 620 to be supported in a stack on the backing plate 622. In this position the plunger may be again moved to the left such that the documents in the stack in storage location 610 are held in sandwiched relation between the back walls 572 of the vertical transport and the backing plate.

As can be appreciated in the exemplary embodiment documents can be selectively stored in a storage location of the device by positioning and moving the plunger so that the document is stored in the storage location as desired. This enables documents to be segregated into various document types. For example in some embodiments the ATM may be operated such that checks that are drawn on the particular institution operating the machine are stored in one storage location of the storage area 430 while others that are not drawn on that institution are stored in the other storage location. Alternatively in some embodiments where the mechanism is used to accept checks and currency bills, bills which have been validated may be stored in one storage location while bills that have been determined to be counterfeit or suspect may be stored in another storage section. In still further alternative embodiments where the device is operated to accept checks and bills, currency bills may be stored in one storage location while checks are stored in another.

In alternative embodiments additional provisions may be made. For example in some embodiments one or more aligned vertical transports may be capable of transporting documents through several vertically aligned storage areas. In such situations a document may be moved to the vertical level associated with a storage area that is appropriate for the storage of the document. Once at that level a plunger may move transversely so as to place the document into the appropriate storage location on either side of the vertical transport. In this way numerous types of documents can be accepted and segregated within the ATM.

In still other alternative embodiments the storage mechanism may be integrated with a document picker mechanism such as shown in U.S. Patent No. 6,331,000 the disclosure of which is incorporated by reference. Thus documents which have been stored such as currency bills may thereafter be automatically removed through operation of the picker mechanism and dispensed to users of the ATM machine. Various approaches may be taken utilizing the principals of the described embodiments.

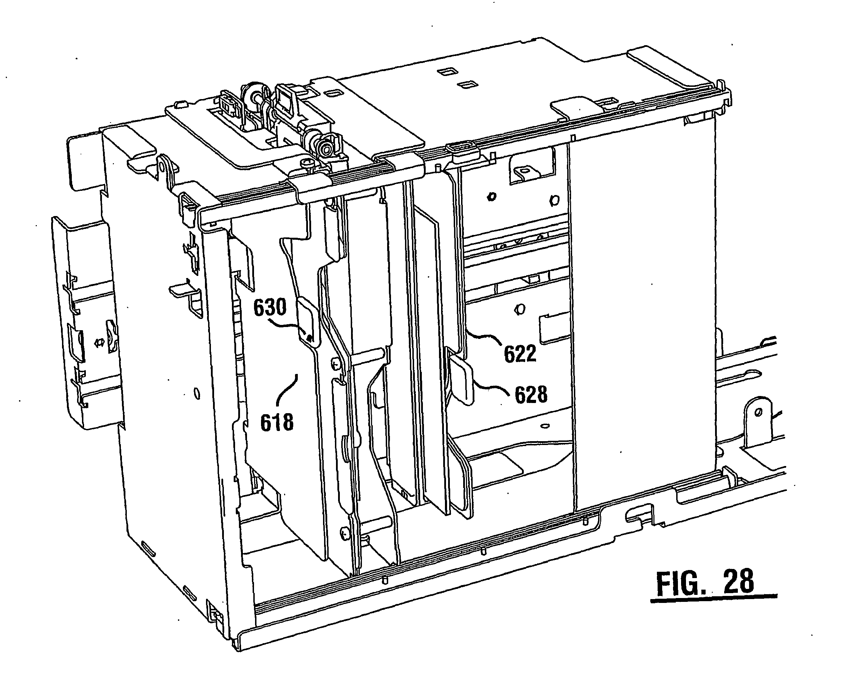

As shown in Figure 2 exemplary storage area 440 is generally held in a closed position such that the items stored therein are not accessible even to a servicer who has access to the interior of the ATM. This is accomplished through use of a sliding door 624 which in the exemplary embodiment is constructed of collapsible sections. The door is enabled to be moved such that access to documents stored in the storage area can be accessed such as is shown in Figure 28. In an exemplary embodiment the ability to open door 624 is controlled by a lock 626. In the exemplary embodiment lock 626 comprises a key lock such that authorized persons may gain access to the interior of the storage area if they possess an appropriate key.

In some exemplary embodiments the deposit accepting device may be mounted in movable supporting connection with structures in the interior of the housing of the banking machine. This may be done in the manner shown in U.S. Patent No. 6,010,065 the disclosure of which is incorporated herein by reference. In some exemplary embodiments a servicer may access the interior of the banking machine housing by opening one or more external doors. Such doors may require the opening of one or more locks before the interior of the housing may be accessed. With such a door open the servicer may move the deposit accepting device 420 while supported by the housing so that the storage area of the device extends outside the housing. This may make it easier in some embodiments to remove documents from the storage area.

In the exemplary embodiment persons authorized to remove documents from the storage area may open the lock and move the door 624 to an open position so as to gain access to the interior of the storage area. Documents that have been positioned in the storage locations can be removed by moving the backing plates 622 and 618 against the spring biasing force of the respective springs or other biasing mechanisms 617, 619, that holds the stacks of stored documents in sandwiched relation. Manually engageable tabs 628 and 630 are provided in the exemplary embodiment so as to facilitate the servicer's ability to move the backing plates against the respective biasing force. With the respective backing plate moved horizontally away from the vertical transport, the stack of documents between the backing plate and vertical transport can be removed. Each backing plate can be moved to remove document stacks on each horizontal side of the vertical transport. Once the stored documents have been removed, the backing plates can return automatically to the appropriate position to accept more documents due to the biasing force. Likewise the door 624 can be closed and the lock returned to the locked position. If the deposit accepting device is movably mounted so that the storage area is outside the machine, it can be moved back into the interior of the housing. The housing can then be secured by closing the doors and locks thereon. This construction of the exemplary embodiment not only facilitates the removal of checks, currency or other documents, but is also helpful in clearing any jams that may occur within the vertical transport.

The exemplary embodiment also provides advantages in terms of clearing jams within the document alignment, analysis and/or escrow areas. For example as shown in Figures 1 and 2, the device may be opened such that the entire transport path for documents up to the point of the vertical transport may be readily accessed. As a result in the event that the document should become jammed therein, a servicer may unlatch a latch which holds a platen in position such as for example latch 632 shown in Figure 1 and move the platen 448 rotationally and the components supported thereon to the position shown so as to enable exposing the document alignment area and document analysis area. As can be appreciated platen 448 is mounted through hinges which enable the platen to rotate about an axis through the hinges so as to facilitate the opening thereof. Likewise the portions of the platen 449 supporting the mechanisms overlying the escrow area can be opened as shown to expose that area of the document transport path so as to facilitate accessing documents therein. As shown in Figures 1 and 2, platen 449 is rotatable about an axis that extends generally perpendicular to the axis about which platen 448 is rotatable. Further in the exemplary embodiment, platens 448 and 449 are configured so that platen 448 must be moved to the open position before platen 449 can be opened. Likewise platen 449 must be closed before platen 448 is closed. This exemplary construction enables the use of a single latch to secure the platens in the operative positions, and to enable unsecuring the single latch so that the platens can both be moved to expose the document alignment, document analysis and escrow areas of the document transport path in the device. Of course, this approach is exemplary and in other embodiments other approaches may be used.

In servicing the exemplary embodiment of the deposit accepting device 420 which for purposes of this service discussion will be described with regard to checks, a servicer generally begins by opening a door or other access mechanism such as a fascia or panel that enables gaining access to an interior area of the housing of the ATM. In an exemplary embodiment the check accepting device 420 is supported on slides, and after unlatching a mechanism that normally holds the device in operative position, the device can be moved, while supported by the housing to extend outside the ATM. Of course in some situations and depending on the type of service to be performed, it may not be necessary to extend the device outside the ATM housing. Alternatively in some situations a servicer may extend the device outside the housing and then remove the device from supporting connection with the ATM housing completely. This may be done for example, when the entire device is to be replaced with a different device.

The servicer may disengage the latch 632 and rotate platen 448 about the axis of its hinges. This exposes the areas of the transport path through the device in the document alignment area 424 and document analysis area 426. It should be noted that when the platen 448 is moved to the open position the toothed contoured edges 456,458 shown in Figure 4, are moved apart.

With the platen 448 moved to expose the document alignment and document analysis areas, any checks which have become caught or jammed therein can be removed by the servicer. The servicer can also conduct other activities such as cleaning the scanning sensors or the magnetic read head. Such cleaning may be done using suitable solvents, swabs or other materials. The servicer may also clean, align, repair or replace other items in the exposed areas of the transport path.

With platen 448 in the open position a servicer may also move platen 449 from the closed position to the open position shown in Figures 2 and 3. Rotating platen 449 about the axis of its supports to the open position, exposes the escrow area 428 of the transport path. A servicer may then clear any jammed documents from the escrow area. The servicer may also clean, align, repair or replace other components that are exposed or otherwise accessible in the escrow area.

Upon completion of service the platen 449 is rotated to the closed position. Thereafter the platen 448 is rotated to the closed position. This brings the contoured edges 456, 458 back into adjacent alignment. With platen 448 in the closed position the latch 632 is secured to hold both platens in the closed positions, the check accepting device can then be moved back into the operating position and secured therein. The servicer when done, will then close the door or other device to close the interior of the ATM housing. Of course these approaches are exemplary.

Upon closing the housing the ATM may be returned to service. This may include passing a test document through the transport path through the deposit accepting device 420 and/or reading indicia of various types from one or more test documents. Of course it should be understood that these approaches are exemplary and in other embodiments other approaches may be used.

Thus the deposit accepting apparatus and system of the exemplary embodiments achieve at least some of the above stated objectives, eliminate difficulties encountered in the use of prior devices and systems, and attain the useful results described herein.

In the foregoing description certain terms have been described as exemplary embodiments for purposes of brevity, clarity and understanding. However no unnecessary limitations are to be implied therefrom because such terms are used for descriptive purposes and are intended to be broadly construed. Moreover the descriptions and illustrations herein are by way of examples and the invention is not limited to the features shown or described.

Further, in the following claims any feature described as a means for performing a function shall be construed as encompassing any means known to those skilled in the art as being capable of carrying out the recited function, and shall not be deemed limited to the particular means shown or described for performing the recited function in the foregoing description, or mere equivalents thereof.

Particular aspects of the present disclosure are set forth in the following numbered clauses:
1. A method comprising:
   (a) receiving a sheet into a cash dispensing ATM;
   (b) moving the sheet in a first direction by engagement of the sheet with a first transport;
   (c) aligning an edge of the sheet with the first direction, including engaging the sheet with at least two second transports that move the sheet in a second direction transverse of the first direction, and sensing the edge of the sheet with a plurality of disposed non-contact sensors extending along the first direction;
   (d) subsequent to (c) moving the aligned sheet in the first direction adjacent at least one sensing device adapted to read at least one of magnetic and optical indicia on the sheet
2. The method according to clause 1 wherein (c) comprises engaging the sheet with at least two second transports disposed from one another along the first direction.
3. The method according to clause 2 and further comprising:
   prior to (c) disengaging the first transport from engagement with the sheet, wherein the sheet is enabled to be moved in the second direction.
4. The method according to clause 3 and further comprising:
   subsequent to (c) and prior to (d), reengaging the sheet and the first transport, wherein in (d) the sheet is moved in engagement with the first transport.
5. The method according to clause 4 wherein the sheet comprises a check, and wherein in (d) the sensing device comprises a magnetic sensing device operative to read indicia in a micr line on the check.
6. The method according to clause 5 wherein in (d) indicia in the micr line is read by a magnetic read head that is movably mounted in supporting relation with the ATM.
7. The method according to clause 5 wherein in (d) optical indicia is read by a scanner device from at least one side of the check.
8. The method according to clause 7 wherein in (d) optical indicia is read from both sides of the check.
9. The method according to clause 8 wherein in (c) the check is moved transversely until a first longitudinal edge of the check is sensed by at least two non-contact sensors.
10. The method according to clause 9 wherein in (c) the check is moved in a first transverse direction until at least one non-contact sensor which comprises a radiation sensing device, ceases to sense a further reduction in sensed radiation with further transverse movement of the check in the first transverse direction.
11. The method according to clause 10 wherein in (c) after ceasing to sense a change in radiation with further movement in the first transverse direction, the check is thereafter moved in a second transverse direction opposed of the first direction until a level of radiation is sensed by the at least one radiation sensing device.
12. The method according to clause 8 and further comprising:
   (e) subsequent to (d) moving a check to an escrow area of the ATM.
13. The method according to clause 12 and further comprising:
   (f) determining through operation of the ATM if the check is to be accepted within the ATM;
   (g) moving the check in a direction opposed of the first direction to outside of the ATM responsive to determining in (f) that the check is not to be accepted in the ATM.
14. The method according to clause 12 and further comprising:
   (f) determining through operation of the ATM if the check is to be accepted in the ATM;
   (g) moving the check from the escrow area to a storage area of the ATM responsive to a determination in (f) that the ATM is to accept the check.
15. The method according to clause 14 and further comprising:
   (h) prior to moving the check to the storage area in (g), marking the check through operation of at least one printer in the ATM.
16. The method according to clause 15 wherein in (h) the check is marked through operation of a rotating ink wheel.
17. The method according to clause 16 wherein in (h) the check is marked through operation of an inkjet printer.
18. The method according to clause 15 wherein in (g) the check is moved to the storage area in engagement with a transport including a pair of disposed guide rails.
19. The method according to clause 15 and further comprising:
   (i) subsequent to (g) moving the check selectively into a section of the storage area by engaging the check with a plunger member moving transversely between the guide rails.
20. The method according to clause 19 and further comprising:
   dispensing cash from the ATM through operation of a cash dispenser responsive to determining in (f) that the check is to be accepted in the ATM.
21. A method comprising:
   (a) receiving a first document in a cash dispensing ATM;
   (b) sensing indicia on the first document with at least one sensing device of the ATM;
   (c) analyzing data corresponding to the indicia sensed on the first document through operation of the ATM;
   (d) subsequent to (b) moving the first document in a transport of the ATM including a pair of disposed document supporting rails;
   (e) moving the first document into a first storage location in the ATM, including engaging the first document with a plunger member moving in a first transverse direction between the rails.
22. The method according to clause 21 and further comprising:
   (f) receiving a second document in the ATM;
   (g) sensing indicia on the second document with at least one sensing device of the ATM;
   (h) analyzing data corresponding to the indicia sensed on the second document through operation of the ATM;
   (i) subsequent to (g) moving the second document in the transport;
   (j) moving the first document into a second storage location in the ATM including engaging the second document with a plunger member moving in a second transverse direction between the rails, wherein the second transverse direction is opposed of the first transverse direction.
23. The method according to clause 21 wherein (e) includes moving the first document in a first transverse direction in the first storage location against an opposing biasing force applied through a first backing plate, beyond a pair of disposed first supporting wall surfaces;
   and further comprising:
   (f) holding the first document in intermediate relation of the first backing plate and the first supporting wall surfaces.
24. The method according to clause 23 and subsequent to (e) and prior to (f), moving the plunger member in a second transverse direction opposed of the first direction.
25. The method according to clause 21 and further comprising:
   (f) prior to (e) moving the plunger member in a second transverse direction opposed of the first transverse direction such that the plunger member is disposed on an opposed side of the transport from the first storage location.
26. The method according to clause 25 wherein (c) includes determining that the first document should be stored in the first storage location, and wherein the plunger member is moved in (f) responsive to the determination in (c).
27. The method according to clause 22 wherein (j) includes moving the second document in the second transverse direction in the second storage location against an opposing biasing force applied through a second backing plate, beyond a pair of disposed second supporting wall surfaces;
   and further comprising:
   (k) holding the second document in intermediate relation of the second backing plate and the second supporting wall surfaces.
28. The method according to clause 27 wherein in (f) the first document is held in a first stack in intermediate relation of the first backing plate and the first supporting wall surfaces;
   and wherein in (k) the second document is held in a second stack in intermediate relation of the second backing plate and second supporting wall surfaces.
29. The method according to clause 28 wherein in (a) the first document comprises a first check and wherein in (f) the second document comprises a second check.
30. The method according to clause 28 wherein in (a) the first document comprises a check, and wherein in (f) the second document comprises a currency bill.
31. The method according to clause 28 wherein in (a) the first document comprises a check, and further comprising:
   (1) prior to (b) moving the check in a first longitudinal direction in engagement with a first transport;
   (m) prior to (b) and subsequent to (1) moving the check in a direction transverse of the direction the check is moved in (1) in engagement with at least two independently moving transports.
32. The method according to clause 31 wherein (m) further comprises moving the check to align an edge of the check with the first direction.
33. The method according to clause 32 wherein (m) further includes sensing the check with a plurality of non-contact sensors disposed along the first direction.
34. The method according to clause. 33 wherein (b) includes sensing magnetic indicia on the check.
35. The method according to clause 34 wherein (b) includes sensing optical indicia on at least one side of the check.
36. The method according to clause 35 and prior to (e), printing indicia on the check through operation of at least one printer in the ATM.
37. The method according to clause 36 and further comprising:
   (n) opening a lock controlling movement of at least one door covering the first storage location;
   (o) subsequent to (n) moving the at least one door;
   (p) subsequent to (o) removing the check with the first stack from between the first backing plate and the first supporting wall surfaces.
38. The method according to clause 37 and further comprising:
   prior to (n) dispensing cash from the ATM responsive to the analysis in (c).
39. The method according to clause 28 and further comprising:
   (1) opening a lock controlling movement of at least one door covering the first storage location;
   (m) subsequent to (I) moving the first door to an open condition;
   (n) subsequent to (m) removing the first stack from between the first backing plate and first supporting wall surfaces.
40. The method according to clause 21 and further comprising:
   dispensing cash from the ATM through operation of a cash dispenser.
41. Apparatus comprising:
   an ink bearing roll adapted to print indicia on checks moving in an automated banking machine;
   a first shaft portion in operative connection with the roll and
   extending in a first axial direction therefrom, wherein the first shaft portion has in supporting connection therewith adjacent a first end disposed from the roll in the first direction, a first axially extending projection adapted to be accepted in a first recess in a biasing tab, wherein the biasing tab is in supporting connection with the banking machine;
   a second shaft portion in operative connection with the roll and extending in a second axial direction therefrom opposed of the first direction, wherein the second shaft portion has in supporting connection therewith adjacent a second end disposed from the roll in the second direction, a second axially extending projection adapted to be accepted in a second recess of a coupling adapted to impart rotational motion to the roll.
42. The apparatus according to clause 41 wherein the roll is eccentric in cross section.
43. The apparatus according to clause 42 wherein the roll in cross section includes a flattened area, whereby when the flattened area is positioned adjacent a check no ink is transferred from the roll to the check.
44. The apparatus according to clause 43 wherein the roll in cross section includes a printing area angularly disposed on the surface of the roll from the flattened area, and wherein an outer surface of the roll in the printing area extends further radially outward relative to the-roll than the flattened area.
45. The apparatus according to clause 44 wherein the outer surface of the roll comprises a plastic coating, and wherein the plastic coating includes at least one opening therein in the printing area, wherein the at least one opening is adapted to pass ink therethrough from the roll to checks.
46. The apparatus according to clause 45 and further comprising a housing, wherein the housing includes an open side, and wherein the roll is enabled to rotate in the housing.
47. The apparatus according to clause 46 wherein the housing includes a plurality of ears in supporting connection therewith, and wherein at least one ear extends outside the housing and adjacent the open side.
48. The apparatus according to clause 47 wherein the housing includes a first ear extending from the housing in a first outward direction generally transverse of the first and second axial directions, and a second ear extending from the housing in a second outward direction generally transverse of the first and second axial directions and opposed of the first outward direction.
49. The apparatus according to clause 48 wherein the second shaft portion includes a radially extending projection in supporting connection with the second axially extending projection, wherein the radially extending projection is adapted to extend in a radially extending recess in the coupling.
50. The apparatus according to clause 49 wherein the radially extending projection is tapered such that the radially extending projection has greater transverse width with increasing proximity to the roll.
51. The apparatus according to clause 50 wherein the housing includes a first aperture, and wherein the first shaft portion extends and is rotatable in the first aperture.
52. The apparatus according to clause 51 wherein the housing includes a second aperture, and wherein the second shaft portion extends and is rotatable in the second aperture.
53. The apparatus according to clause 52 wherein the first shaft portion includes in supporting connection therewith, a first flange portion, wherein the first flange portion is disposed outside the housing adjacent the first aperture.
54. The apparatus according to clause 53 wherein the second shaft portion includes in supporting connection therewith, a second flange portion, wherein the second flange portion is disposed outside the housing and adjacent the second aperture.
55. The apparatus according to clause 54 wherein one of the first and second shaft portions includes an axially extending holding projection, and the other of the first and second shaft portions includes an axially extending holding recess, and wherein the axially extending holding projection and axially extending holding recess extend in engagement within the roll.
56. The apparatus according to clause 55 wherein the roll includes a rectangular roll opening therein, and wherein at least one of the first and second shaft portions has in supporting connection therewith at least one rectangular projection, wherein the at least one rectangular projection extends in the rectangular roll opening.
57. The apparatus according to clause 56 wherein the first and second shaft portions comprise a catch, and wherein the first and second shaft portions are held in engagement by the catch.
58. The apparatus according to clause 41 wherein the roll comprises an outer surface including a plastic coating, and wherein the plastic coating includes at least one opening, and wherein the at least one opening is adapted to pass ink therethrough from the roll to checks.
59. The apparatus according to clause 41 wherein the roll is eccentric in cross section and includes a flattened area and a printing area, and wherein the printing area extends further radially outward relative to the roll than the flattened area.
60. The apparatus according to clause 41 wherein the second shaft portion includes a radially extending projection in supporting connection with the second axially extending projection, wherein the radially extending projection is adapted to extend in a radially extending recess in the coupling.
61. The apparatus according to clause 60 wherein the radially extending projection is tapered such that the radially extending projection has greater transverse width with increasing proximity to the roll.
62. The apparatus according to clause 41 and further comprising a housing, wherein the housing includes an open side, and wherein the roll is enabled to rotate in the housing and engage checks through the open side.
63. The apparatus according to clause 62 wherein the housing is in supporting connection with a plurality of ears extending outside the housing and adj acent the open side.
64. The apparatus according to clause 41 wherein at least one of the first and second shaft portions includes at least one rectangular projection, and wherein the roll includes a rectangular roll opening, and wherein the at least one rectangular projection extends in the rectangular roll opening.
65. The apparatus according to clause 52 wherein the first and second shaft portions comprise a catch, and wherein the catch extends in the roll and holds the first and second shaft portions in engaged relation.
66. The apparatus according to clause. 57 and further comprising:
   an automated banking machine including a cash dispenser;
   a check imaging device in the banking machine;
   a check transport in the banking machine;
   a clutch in the banking machine in operative connection with the coupling;
   wherein the roll is rotated responsive to the clutch and is operative to print indicia on checks moved in the transport.
67. The apparatus according to clause 41 and further comprising:
   an automated banking machine including a cash dispenser;
   a check imaging device in the banking machine;
   a check transport in the banking machine;
   a drive in the banking machine in operative connection with the coupling;
   wherein the roll is rotated responsive to the drive and is operative to print indicia on checks moved in the transport.
68. A method comprising:
   (a) moving a biasing tab operating to axially bias a first shaft portion in supporting relation with a first ink bearing print roll in a cash dispensing automated banking machine to cause a second shaft portion axially disposed from the first shaft portion to maintain engagement with a rotatable coupling, such that the second shaft portion is no longer biased by the biasing tab to maintain engagement with the coupling;
   (b) subsequent to (a) removing a first axially extending projection in supporting relation with the first shaft portion, from engagement with a first recess in the biasing tab;
   (c) subsequent to (b) disengaging the second shaft portion and the coupling.
69. The method according to clause 68 wherein the biasing tab is in supporting relation with the banking machine, and wherein (a) includes deforming the tab to move such tab axially away from the first roll.
70. The method according to clause 69 wherein (b) includes moving the axially extending projection upwardly out of the first recess.
71. The method according to clause 70 wherein (c) includes disengaging a second axially extending projection in supporting relation with the second shaft portion, and a second recess in the coupling.
72. The method according to clause 71 wherein (c) includes disengaging a radially extending projection in supporting relation with the second axially extending projection, and a radially extending recess in the coupling.
73. The method according to clause 72 and further comprising:
   (d) subsequent to (a) disengaging at least one ear in supporting relation with a housing extending in generally surrounding relation of the first roll, from a housing positioning projection in supporting relation with the banking machine.
74. The method according to clause 73 and further comprising:
   (e) subsequent to (c), engaging a further second shaft portion in supporting relation with a second ink bearing print roll, and the coupling;
   (f) engaging a further first axially extending portion of a further first shaft portion in supporting relation with the second roll, in the first recess in the biasing tab;
   (g) allowing movement of the biasing tab such that the biasing tab biases the further first shaft portion to maintain the further second shaft portion in engagement with the coupling.
75. The method according to clause 74 and further comprising:
   (h) subsequent to (d), engaging a further ear of a further housing that extends in generally surrounding relation of the second roll, and the housing positioning projection.
76. The method according to clause 75 wherein the second roll comprises an ink bearing roll including a plastic outer coating, and wherein the plastic coating includes at least one opening, wherein ink is enabled to pass through the at least one opening, and further comprising:
   (i) rotating the second roll responsive to rotation of the coupling.
77. The method according to clause 75 wherein (e) comprises engaging a further second axially extending projection in supporting relation with the further second shaft portion, and the second recess of the coupling.
78. The method according to clause 77 wherein (e) further comprises extending a further radially extending projection in supporting relation with the further second axially extending projection, in the radially extending recess of the coupling.
79. The method according to clause 78 and further comprising:
   (h) engaging a further ear of a further housing that extends in generally surrounding relation of the second roll, and the housing positioning projection.
80. The method according to clause 79 and further comprising:
   (i) moving a document in the automated banking machine;
   (j) rotating the second roll as the document passes adjacent thereto so that the roll applies ink to the document.
81. The method according to clause 80 wherein the second roll comprises a plastic cover including at least one opening therethrough, and wherein in (j) ink passes through the at least one opening onto the document.
82. The method according to clause 81 wherein in (j) the ink passing through the at least one opening produces a cancellation mark on the document.
83. The method according to clause 82 and further comprising:
   (k) receiving a check into the banking machine;
   (1) moving the check in at least one transport in the banking machine;
   (m) during at least a portion of (1) rotating the second roll
   wherein a cancellation mark is printed on the check.
84. The method according to clause 83 and further comprising:
   (n) dispensing cash from the banking machine through operation of a cash dispenser.
85. A method comprising:
   (a) moving a biasing tab including a first recess, wherein the biasing tab is in supporting relation with a cash dispensing automated banking machine;
   (b) engaging a first axially extending projection supported on a first shaft portion which is in supporting relation with an ink bearing print roll, in the first recess of the biasing tab;
   (c) engaging a second axially extending projection of a second shaft portion in supporting relation with the print roll, and a second recess in a rotatable coupling of the banking machine.
86. The method according to clause 85 wherein the print roll includes a plastic cover including at least one opening, wherein ink is enabled to pass through the at least one opening, and wherein (c) further comprises extending a radially extending projection in supporting relation with the second axially extending projection, and a radially extending recess in the coupling.
87. The method according to clause 86 wherein the housing extends in generally surrounding relation of the roll, and wherein the housing includes an open side, and wherein the housing includes at least one ear in supporting relation with the housing adjacent the open side, and further comprising:
   (d) engaging the at least one ear and at least one respective housing positioning projection, wherein the housing positioning projection is in supporting connection with a housing of the banking machine.
88. The method according to clause 87 and further comprising:
   (e) moving a document in at least one transport within the machine;
   (f) during at least a portion of (e), rotating the roll such that the document is marked with ink which passes through the at least one opening.
89. The method according to clause 88 wherein the roll includes in cross section a flattened area and a printing area, wherein the printing area extends further radially outward on the roll relative to the flattened area, and wherein the at least one opening is in the printing area, and wherein in (f) the printing area of the roll engages the document through the open side of the housing.
90. The method according to clause 89 and further comprising:
   (g) dispensing cash from the banking machine through operation of a cash dispenser.
91. An automated banking machine apparatus comprising:
   a sheet path extending within the machine, wherein sheets move in the sheet path;
   an inkjet printhead positioned adjacent to and on a first side of the sheet path, wherein the printhead is adapted to print indicia on sheets in the sheet path;
   an ink catcher positioned on a second side of the sheet path opposite of the printhead, wherein the ink catcher includes:
      a rotatably mounted first body potion including a first ink accepting opening to an interior area thereof; and
      a flexible wiper member in supporting connection with
      the first body portion;
   a drive in operative connection with the first body portion,
   wherein the drive is adapted to cause the first body portion to rotate between a first position wherein the first ink accepting opening is aligned to accept ink from the printhead, and a second position angularly disposed from the first position
   wherein the wiper member engages the printhead.
92. The apparatus according to clause 91 wherein the ink catcher further includes:
   a body, wherein the body has an ink holding area, wherein the body extends in the interior area of the rotatably mounted first body portion.
93. The apparatus according to clause 92 wherein the body further includes a projecting portion, wherein the projecting portion includes a second ink accepting opening, wherein the second ink accepting opening extends in the interior area of the first body portion and is in fluid communication with the ink holding area.
94. The apparatus according to clause 93 wherein in the first position of the first body portion the second ink accepting opening is generally aligned with the first ink accepting opening and the printhead.
95. The apparatus according to clause 94 wherein the projecting portion is generally cylindrical and extends within the interior area of the first body portion.
96. The apparatus according to clause 94 wherein the first body portion is generally cylindrical and includes a flattened area on an exterior surface thereof, wherein the first ink accepting opening extends through the first body portion in the flattened area.
97. The apparatus according to clause 96 wherein the flexible wiper member is in supporting connection with the first body portion and is angularly disposed from the flattened area.
98. The apparatus according to clause 97 and further comprising an ink absorbing member positioned in the ink holding area of the body.
99. The apparatus according to clause 98 and further comprising a mounting portion in supporting connection with the body, wherein the mounting portion is releasibly engageable in supporting connection with a housing portion of the machine.
100. The apparatus according to clause. 99 and further comprising:
   a scanning sensor adjacent the sheet path, wherein the scanning sensor is adapted to produce data corresponding to at least one image of at least one portion of at least one sheet positioned in the sheet path.
101. The apparatus according to clause 100 and further comprising:
   a first transport, wherein the first transport moves sheets in a first direction in the sheet path, wherein sheets move in the first direction relative to the scanning sensor;
   a plurality of non-contact alignment sensors, at least two of the alignment sensors being disposed from one another along the first direction;
   a second transport, wherein the second transport moves sheets in a second direction generally transverse of the first direction and wherein the second transport is operative to move sheets in the transverse direction responsive to such sheets being sensed by a plurality of the alignment sensors.
102. The apparatus according to clause 101 and further comprising:
   at least one magnetic read head positioned adjacent the sheet path, wherein the at least one magnetic read head is adapted to produce data corresponding to magnetic indicia on sheets in the sheet path.
103. The apparatus according to clause 102 and further comprising:
   at least one user input device adapted to receive inputs from users of the machine, wherein the inputs are usable to identify at least one of a user and a user associated account;
   at least one output device adapted to produce outputs from the machine;
   at least one cash dispenser adapted to dispense cash to users of the machine.
104. The apparatus according to clause 103 and further comprising:
   at least one terminal processor in operative connection with the printhead and the drive, wherein the at least one terminal processor is operative to cause the printhead to print indicia on at least one sheet, and to cause the rotatably mounted first body portion to rotate to cause the flexible wiper member to engage the printhead at a time when the printhead is not operated to print indicia.
105. The apparatus according to clause 91 and further comprising:
   at least one terminal processor in operative connection with the printhead and the drive, wherein the at least one terminal processor is operative to cause the printhead to print indicia on at least one sheet, and to cause the rotatably mounted first body portion to rotate to cause the flexible wiper member to engage the printhead.
106. The apparatus according to clause 104 wherein the at least one terminal processor is in operative connection with the scanning sensor, and wherein the at least one terminal processor is operative to resolve numerical data corresponding to indicia on the at least one sheet responsive to the data corresponding to at least one image.
107. The apparatus according to clause 106 wherein the at least one terminal processor is operative to cause the machine to send data corresponding to at least one image to a remote computer.
108. The apparatus according to clause 107 wherein the at least one terminal processor is operative to cause the cash dispenser to operate responsive to at least one communication received by the machine from a remote computer.
109. The apparatus according to clause 108 and further comprising:
   a storage area in operative connection with the sheet path,
   wherein at least one sheet on which indicia is printed through operation of the printhead moves to the storage area.
110. The apparatus according to clause 109 and further comprising:
   a movable member movable in the storage area;
   a further drive in operative connection with the movable member, wherein the movable member is movable responsive to operation of the further drive;
   and wherein the storage area comprises a plurality of storage sections, and wherein the further drive is in operative connection with the at least one terminal processor, and
   wherein the at least one movable member is adapted to move responsive to the at least one terminal processor to cause sheets received in the storage area from the sheet path to be selectively positioned in the plurality of storage sections.
111. The apparatus according to clause. 91 and further comprising:
   at least one terminal processor;
   at least one cash dispenser;
   wherein the at least one terminal processor is in operative connection with the drive, printhead and cash dispenser, and
   wherein the at least one terminal processor is operative to cause the printhead to print indicia on at least one sheet in the sheet path, cause the drive to rotate the first body portion to cause the flexible wiper member to engage the printhead, and to cause the cash dispenser to operate whereby cash is dispensed from the machine.
112. The apparatus according to clause 111 and further comprising:
   a scanning sensor adjacent the sheet path, wherein the scanning sensor is operative to produce data corresponding to an image of at least a portion of at least one sheet.
113. The apparatus according to clause 112 wherein the scanning sensor is in operative connection with the at least one terminal processor, and wherein the at least one terminal processor is operative to cause the machine to send data corresponding to the image to at least one remote computer.
114. The apparatus according to clause 113 wherein the at least one sheet comprises a check.
115. The apparatus according to clause 114 wherein the at least one terminal processor is operative to cause the printhead to expel ink when no sheet is adjacent the printhead in the sheet path, and then causes the drive to operate to rotate the first body portion in a first direction and cause the flexible wiper member to engage the printhead, and then causes the drive to rotate the first body portion further in the first direction until the first ink accepting opening is generally aligned with the printhead.
116. The apparatus according to clause 115 wherein the ink catcher further comprises a body including an ink holding area and a projecting portion, wherein the ink holding area is in fluid connection with the projecting portion, and wherein the first body portion rotates about the projecting portion.
117. An automated banking machine apparatus comprising:
   a sheet path wherein checks input to the machine move within the machine in the sheet path;
   a scanning sensor adjacent the sheet path adapted to produce data corresponding to an image of at least a portion of at least one check;
   an inkjet printhead adjacent and on a first side of the sheet path, adapted to print indicia on at least one check;
   an ink accepting body on a second side of the sheet path opposed of the printhead, and including at least one ink accepting opening adapted to accept ink from the printhead therein;
   at least one rotatable member positioned adjacent the at least one ink accepting opening, the at least one rotatable member including at least one rotatable member opening and at least one flexible wiper member in supporting connection therewith;
   at least one drive in operative connection with the at least one rotatable member, wherein the at least one drive is operative to rotate the at least one rotatable member between angular positions wherein in a first angular position the at least one rotatable member opening is generally aligned with the at least one ink accepting opening, and in a second angular position the flexible wiper member engages the printhead.
118. A method comprising:
   (a) installing an inkjet printhead adjacent and on a first side of a sheet path in an automated banking machine,
      wherein sheets move in the sheet path, and wherein the printhead is positioned in opposed relation of an ink catcher, wherein the ink catcher is positioned on a second side of the sheet path opposed of the first side, wherein the ink catcher includes a rotatably mounted first body portion, wherein the first body portion includes a first ink accepting opening to an interior area thereof and a flexible wiper member in supporting connection therewith and disposed from the ink accepting opening;
   (b) operating the inkjet printhead to expel ink therefrom toward the sheet path.
119. The method according to clause 118 and further comprising:
   (c) moving at least one sheet in the sheet path;
      wherein in (b) ink is deposited on the sheet.
120. The method according to clause 119 and further comprising:
   (d) subsequent to (b), operating a drive in operative connection with the first body portion to cause the first body portion to rotate, wherein rotation of the first body portion engages the flexible wiper member and the printhead.
121. The method according to clause 118 and further comprising:
   (c) subsequent to (b), operating a drive in operative connection with the first body portion to cause the first body portion to rotate, wherein rotation of the first body portion engages the flexible wiper member and the printhead.
122. The method according to clause 120, wherein the ink catcher comprises a body including an internal ink holding area, and wherein the body includes a projecting portion in fluid communication with the ink holding area, and wherein in (d) the first body portion rotates in generally surrounding relation of the projecting portion.
123. The method according to clause 122 wherein the projecting portion includes a second ink accepting opening, and wherein in (d) the first body portion rotates between a first position in which the first ink accepting opening in the first body portion and the second ink accepting opening in the projecting portion are generally aligned with the printhead, and at least one second position in which the flexible wiper member engages the printhead and the first ink accepting opening is angularly disposed from the second ink accepting opening.
124. The method according to clause 123 wherein in (d) the first body portion is rotated about one full turn and stops in the first position.
125. The method according to clause 121 wherein in (c) the first body portion is rotated about 360 degrees in a first rotational direction.
126. The method according to clause 124 and further comprising:
   (e) capturing data corresponding to an image of the at least one sheet moving in the sheet path, through operation of a scanning sensor.
127. The method according to clause 126 and further comprising:
   (f) dispensing cash from the machine through operation of a cash dispenser.
128. The method according to clause 127 and further comprising:
   (g) removing the body of the ink catcher from the machine.
129. The method according to clause 128 wherein (g) includes removing the projecting portion from the interior area of the first body portion.
130. The method according to clause 129 and further comprising:
   (h) subsequent to (g), installing a further ink catcher body in the machine, wherein the further body includes a further ink holding area.
131. The method according to clause 130 wherein (h) comprises extending a further projecting portion of the further body within the interior of the first body portion.
132. The method according to clause 118 and further comprising:
   (c) installing a body of the ink catcher in the machine, wherein the body includes an internal ink holding area and a projecting portion in fluid communication with the ink holding area, wherein in installing the body the projecting portion is extended into the interior area of the first body portion.
133. The method according to clause 132 wherein the projecting portion includes a second ink accepting opening, and further comprising:
   (d) prior to (b), rotating the first body portion responsive to a drive, to a first rotational position, wherein in the first rotational position the printhead, first ink accepting opening and second ink accepting opening are generally aligned;
   wherein (b) is carried out with the first body portion in the first position.
134. The method according to clause 133 wherein during at least a portion of (b) ink passes through the first ink accepting opening.
135. A method comprising:
   (a) installing a body of an ink catcher including an internal ink holding area in an automated banking machine,
      wherein the body includes a projecting portion in fluid communication with the ink holding area, and wherein in installing the body the projecting portion is extended in an interior area of a rotatably mounted annular first body portion of the ink catcher, wherein the first body portion includes a first ink accepting opening and a flexible wiper member in supporting connection with the first body portion and disposed on the first body portion from the first ink accepting opening, wherein the first body portion is disposed on a first side of a sheet path within the machine;
   (b) operating an inkjet printhead positioned on a second side of the sheet path opposed of the first side and aligned with the first ink accepting opening, to expel ink therefrom toward the sheet path.
136. The method according to clause 135 and further comprising:
   (c) subsequent to (a) rotating the first body portion with the projecting portion extending within the interior area thereof, to cause the flexible wiper member to engage the printhead.
137. The method according to clause 135 and further comprising:
   prior to (b), installing the inkjet printhead in the machine such that ink expelled therefrom is directed toward the first ink accepting opening in the first body portion.
138. A method comprising:
   (a) accessing an interior area of a housing of an automated banking machine including a cash dispenser;
   (b) opening a door covering a storage area in supporting connection with the housing in the interior area, wherein the storage area includes a first stack comprising a plurality of documents, wherein a generally vertically extending document transport extends in the storage area, and wherein the first stack is positioned in intermediate relation between the vertical transport and a first backing plate;
   (c) moving the first backing plate in a direction generally horizontally away from the vertical transport;
   (d) subsequent to (c), removing the first stack from the storage area.
139. The method according to clause 138 wherein the storage area comprises a second stack comprising a plurality of documents, and wherein the second stack is positioned intermediate of the vertical transport and a second backing plate, and wherein the second stack is positioned on a horizontal side of the vertical transport opposite of the first stack, and further comprising:
   (e) moving the second backing plate in a direction generally horizontally away from the vertical transport;
   (f) subsequent to (e), removing the second stack from the storage area.
140. The method according to clause 139 and further comprising:
   (g) subsequent to (d), closing a door to cover the storage area.
141. The method according to clause 140 wherein in (d) the first stack comprises a plurality of checks.
142. The method according to clause 140 wherein in (d) the first stack comprises a plurality of currency bills.
143. The method according to clause 141 wherein in (f) the second stack comprises a plurality of currency bills.
144. The method according to clause 140 wherein the storage area includes a movable plunger, wherein the plunger is movable generally horizontally through the vertical transport, and wherein in (d) the first stack is removed from intermediate of the plunger and the first backing plate.
145. The method according to clause 140 wherein the first backing plate comprises a first tab portion and is biased generally horizontally toward the vertical transport by a first biasing mechanism, and wherein (c) comprises manually engaging the first tab portion and moving the first tab portion generally horizontally away from the vertical transport against the force of the first biasing mechanism.
146. The method according to clause 145 wherein the second backing plate comprises a second tab portion and is biased generally horizontally toward the vertical transport by a second biasing mechanism, and wherein (e) comprises manually engaging the second tab portion and moving the second tab portion generally horizontally away from the vertical transport against the force of the second biasing mechanism.
147. The method according to clause 146 wherein the door includes a lock, and further comprising:
   (h) subsequent to (a) and prior to (b), unlocking the lock.
148. The method according to clause 147 and subsequent to (g), securing the lock.
149. The method according to clause 146, wherein the storage area is within a deposit accepting device including at least one document transport, and at least one platen movably mounted in supporting connection with the deposit accepting device, and further comprising:
   moving the platen away from the at least one document transport.
150. The method according to clause 146, wherein the storage area is within a deposit accepting device movably mounted in supporting connection with the housing, and further comprising:
   subsequent to (a) and prior to (b), moving the deposit accepting device such that the storage area extends outside the housing;
   wherein during at least a portion of (b) the storage area extends outside the housing.
151. The method according to clause 150 and further comprising:
   (h) subsequent to (g), moving the deposit accepting device so that the storage area extends within the housing.
152. The method according to clause 151 and further comprising:
   (i) subsequent to (h), accepting a check in the machine and generating image data corresponding to an image of the check through operation of the deposit accepting device.
153. The method according to clause 152 and further comprising:
   (j) subsequent to (h) dispensing cash from the automated banking machine.
154. The method according to clause 138 and further comprising:
   (e) dispensing cash from the automated banking machine.
155. An automated banking machine comprising:
   at least one input device adapted to receive at least one input from users of the machine;
   at least output device adapted to provide at least one output to users of the machine;
   at least one currency dispenser adapted to dispense currency from the machine to users of the machine;
   an item accepting opening adapted to receive into the machine, sheet items from users of the machine;
   at least one sheet item transport in the machine, wherein the at least one transport is in operative connection with the item accepting opening, and wherein the at least one transport includes a pair of disposed sheet supporting rail portions;
   a storage area, wherein the rail portions of the at least one transport extend in the storage area and intermediate a first sheet storage location and a second sheet storage location in the storage area;
   a movably mounted plunger member in the storage area, wherein the plunger member is movable transversely between the rail portions;
   at least one drive in operative connection with the plunger member, wherein the at least one drive is operative to selectively move the plunger transversely between the rail portions;
   wherein when a sheet is in the at least one transport, movement of the plunger member in a first transverse direction between the rail portions is operative to cause a sheet to move to the first storage location, and movement of the plunger member in a second transverse direction opposed of the first transverse direction is operative to cause the sheet to move to the second storage location.
156. The machine according to clause 155 and further comprising:
   a first backing plate movably mounted in the storage area and bounding the first storage location;
   a first biasing mechanism in operative connection with the first backing plate and biasing the first backing plate to move toward the rail portions;
   wherein movement of the plunger member in the first transverse direction causes the first backing plate to move against the force of the first biasing mechanism in the first transverse direction and the sheet to be in supporting connection with the first backing plate.
157. The machine according to clause 156 and further comprising:
   a second backing plate movably mounted in the storage area and bounding the second storage location;
   a second biasing mechanism in operative connection with the second backing plate and biasing the second backing plate to move toward the rail portions;
   wherein movement of the plunger member in the second transverse direction causes the second backing plate to move against the force of the second biasing mechanism in the second transverse direction, and the sheet to be in supporting connection with the second backing plate.
158. The machine according to clause 157 and further comprising:
   at least one processor in operative connection with the at least one drive;
   at least one sensing device in operative connection with the at least one processor, wherein the at least one sensing device is operative to sense the indicia on the sheet;
   wherein the at least one processor is operative responsive to indicia sensed on the sheet to operate the drive to move the sheet to one of the first storage location and second storage location.
159. The machine according to clause 158 and further comprising a sheet path in the machine, wherein the sheet path extends between the item accepting opening and the storage area, and wherein the at least one sensing device is adapted to sense indicia on the sheet in the sheet path, and wherein the at least one processor is operative to position the plunger member on a second transverse side of the rail portions opposite the first storage location prior to the sheet being in engagement with the rail portions, whereby movement of the plunger member in the first transverse direction when the sheet is between the rail portions, moves the sheet to the first storage location.
160. The machine according to clause 159 wherein the at least one processor is operative to position the plunger member on a first transverse side of the rail portions opposite the second storage location prior to the sheet being in engagement with the rail portions, whereby movement of the plunger member in the second transverse direction when the sheet is between the rail portions moves the sheet to the second storage location.
161. The machine according to clause 160 and further comprising:
   a pair of disposed first wall surfaces bounding the first storage location and in opposed facing direction of the first backing plate;
   wherein when the plunger member moves the sheet from engagement with the rail portions to the first storage location, the plunger member moves in the first transverse direction between the first wall surfaces and moves the sheet in the first transverse direction beyond the first wall surfaces;
   and wherein after the sheet is in the first storage location, when the plunger member moves in the second transverse direction from the first storage location, the sheet is positioned between the first wall surfaces and the first backing plate.
162. The machine according to clause 161 and further comprising:
   a pair of opposed second wall surfaces bounding the second storage location and in opposed facing direction of the second backing plate;
   wherein when the plunger member moves the sheet from engagement with the rail portions to the second storage location, the plunger member moves in the second transverse direction between the second wall surfaces and moves the sheet in the second transverse direction beyond the second wall surfaces;
   and wherein the sheet is in the second storage location, when the plunger member moves in the first transverse direction from the second storage location, the sheet is positioned between the second wall surfaces and the second backing plate.
163. The machine according to clause 162 wherein the rail portions extend generally vertically in the storage area, and wherein when the plunger member moves transversely between the rail portions the plunger member moves generally horizontally.
164. The machine according to clause 163 wherein the at least one sensing device comprises a scanning sensor, and wherein the at least one processor is operative responsive to the scanning sensor to generate data corresponding to an image of at least a portion of the sheet.
165. The machine according to clause 164 wherein the at least one sensing device further comprises a magnetic sensing device.
166. The machine according to clause 165 and further comprising:
   at least one printer adjacent the sheet path, wherein the at least one printer is in operative connection with the at least one processor, and wherein the at least one printer is adapted to print indicia on the sheet in the sheet path.
167. The machine according to clause 166 and further comprising a first sheet moving transport and a second sheet moving transport, wherein the first sheet moving transport moves the sheet in a first sheet moving direction and the second sheet moving transport moves the sheet in a second sheet moving direction generally perpendicular of the first sheet moving direction.
168. The machine according to clause 167 and further comprising:
   a plurality of noncontact sensors disposed along the first direction, wherein each of the plurality of noncontact sensors is in operative connection with the at least one processor;
   at least one second transport drive in operative connection with the second transport and the at least one processor;
   wherein the at least one processor is operative to cause the sheet to be aligned in the first sheet moving direction by moving the sheet in the second sheet moving direction and sensing the sheet with a plurality of noncontact sensors.
169. The machine according to clause 168 and further comprising at least one movable door overlying the storage area, wherein moving the door enables accessing the first and second storage locations.
170. The machine according to clause 168 and further comprising a first stack of sheets in the first storage location, wherein moving the plunger member in the first transverse direction between the rail portions is operative to include the sheet in the first stack.
171. The machine according to clause 170 and further comprising a second stack of sheets in the second storage location, wherein moving the plunger member in the second transverse direction between the rail portions is operative to include the sheet in the second stack.
172. The machine according to clause 168 wherein the magnetic sensing device is adapted to read micr characters on the sheet.
173. The machine according to clause 168 wherein the sheet path includes an escrow area between the at least one sensing device and the storage area.
174. The machine according to clause 168 wherein the sheet comprises a check and wherein the at least one processor is operative to cause to be sent from the machine data corresponding to an image of at least a portion of the check.
175. The machine according to clause 168 wherein the storage area is movably mounted in supporting connection with the machine, and wherein the storage area is movable to extend outside the machine.
176. The machine according to clause 155 and further comprising:
   at least one processor in operative connection with the at least one drive;
   at least one sensing device in operative connection with the at least one processor, wherein the at least one sensing device is operative to sense indicia on the sheet;
   wherein the at least one processor is operative responsive to indicia sensed on the sheet to cause the at least one drive to move the sheet to one of the first storage location and the second storage location.
177. The machine according to clause 155 and further comprising at least one processor in operative connection with the at least one drive, wherein the at least one processor is operative to cause the plunger member to be positioned on an opposed side of the rail portions from the storage location to which the sheet will be moved, prior to the sheet being in the storage area.
178. The machine according to clause 155 and further comprising:
   at least one processor;
   at least one scanning sensor operative to sense indicia on the sheet, wherein the at least one scanning sensor is in operative connection with the at least one processor;
   wherein the at least one processor is operative to cause to be sent from the machine, data corresponding to an image of at least a portion of the sheet.
179. The machine according to clause 178 wherein the sheet comprises a check.
180. The machine according to clause 179 and further comprising at least one magnetic sensing device in operative connection with the at least one processor, wherein the at least one magnetic sensing device is operative to read micr data on the check, and wherein the at least one processor is operative to cause to be sent from the machine, data corresponding to the micr data read from the check.
181. The machine according to clause 155 wherein the sheet comprises at least one of a check and a currency bill.
182. A method comprising:
   (a) accessing an interior area of an automated banking machine including a cash dispenser;
   (b) moving a first platen to expose an escrow area of a transport path of a check accepting device;
   (c) moving a second platen to expose a document alignment area of the transport path of the check accepting device.
183. The method according to clause 182 and further comprising:
   (d) removing at least one check from at least one of the escrow area and document alignment area.
184. The method according to clause 183,
   wherein (b) comprises rotating the first platen while in supporting relation with the check accepting device, about a first axis, and
   wherein (c) comprises moving the second platen while in supporting connection with the check accepting device about a second axis, wherein the second axis is generally perpendicular to the first axis.
185. The method according to clause 184 wherein the transport path is bounded by a guide portion, wherein the guide portion is bounded by a first toothed contoured edge, and wherein the second platen includes a second toothed contoured edge generally corresponding to and movable into adjacent relation of the first toothed contoured edge, and wherein (c) comprises moving the second toothed contoured edge rotationally away from the first toothed contoured edge.
186. The method according to clause 185 wherein (c) includes exposing at least one scanning sensor in the transport path.
187. The method according to clause 186 wherein (c) includes exposing at least one magnetic sensor in the transport path.
188. The method according to clause 187 and further comprising:
   (e) subsequent to (c), cleaning at least one of the at least one scanning sensor and magnetic sensor.
189. The method according to clause 188 wherein the automated banking machine comprises a housing, and wherein the check accepting device is movably mounted in supporting relation with the housing, and further comprising:
   (f) subsequent to (a), moving the check accepting device in supporting relation with the housing such that the check accepting device extends outside the housing.
190. The method according to clause 189 and further comprising:
   (g) subsequent to (a), removing at least one stack of checks from a storage area in the check accepting device.
191. The method according to clause 190 and further comprising:
   (h) subsequent to (a), and prior to (g), opening at least one door covering the storage area of the check accepting device.
192. The method according to clause 191 wherein (g) includes moving a backing plate against the force of a biasing mechanism, and removing the at least one stack of checks from between the backing plate and a transport in the storage area.
193. The method according to clause 192 and further comprising:
   removing at least one printhead from adjacent the transport path.
194. The method according to clause 193 and further comprising:
   (i) subsequent to (h), moving the second platen through rotation about the second axis to bring the first and second toothed contoured edges into adjacent relation, and closing the document alignment area of the transport path.
195. The method according to clause 194 and further comprising:
   (j) subsequent to (h), moving the first platen through rotation about the first axis to close the escrow area of the transport path.
196. The method according to clause 195 and further comprising:
   (k) subsequent to (i), engaging a latch on the check accepting device, wherein engagement of the latch is adapted to hold the second platen in position closing the document alignment area.
197. The method according to clause 196 and further comprising prior to (c), disengaging the latch.
198. The method according to clause 182 and further comprising:
   (d) prior to (c), disengaging a latch on the check accepting device, wherein disengaging the latch enables the second platen to be rotatably moved about an axis.
199. The method according to clause 182 wherein (c) exposes at least one of a scanning sensor and a magnetic sensing device, and further comprising, cleaning at least one of at least one scanning sensor and at least one magnetic sensor.
200. The method according to clause 182 and further comprising:
   moving the first platen rotationally about a first axis to close the escrow area;
   moving the second platen rotationally about a second axis generally perpendicular to the first axis, to close the document alignment area.
201. The method according to clause 200 and further comprising:
   (d) moving a document in the transport path;
   (e) operating the machine to produce data corresponding to an image of at least a portion of the document.
202. The method according to clause 201 and further comprising:
   dispensing cash from the machine.
203. Apparatus comprising:
   an automated banking machine including a housing;
   a user interface in supporting connection with the housing, the user interface including at least one user input device and at least one user output device;
   an opening in the housing adapted to receive documents into the machine from users;
   at least one first transport adapted to move a document received through the opening in a first direction in a document alignment area within the machine;
   a plurality of noncontact sensors in the document alignment area adapted to sense at least one edge of a document in the document alignment area;
   a plurality of second transports in the document alignment area, wherein each second transport is adapted to move a document in the document alignment area in a second direction generally transverse of the first direction, and wherein at least one second transport is spaced in the first direction from at least one other second transport;
   at least one document sensor in the machine adapted to sense indicia on documents;
   at least one drive, wherein the at least one drive is adapted to independently drive the at least one transport and each of the plurality of second transports;
   at least one processor in operative connection with each of the plurality of noncontact sensors, at least one document sensor and at least one drive;
   wherein the at least one processor is operative to cause a first document to move in the alignment area in engagement with the first transport in a first direction, and to move the first document in the alignment area in the second direction in engagement with the plurality of second transports to an aligned position responsive to sensing at least one edge of the first document with the plurality of noncontact sensors, and to cause the first document to move from the aligned position in the first direction to adjacent the at least one document sensor.
204. The apparatus according to clause 203 wherein the first transport comprises at least one first moving member movably supported on at least one movable first carriage;
   and further comprising:
   at least one carriage drive adapted to move the first carriage,
   wherein the at least carriage drive is in operative connection with the at least one processor;
   wherein the at least one processor is operative to cause the at least one carriage drive to move the at least one first carriage to cause engagement of the at least one first moving member from the first document when the first document is moved in the first direction in the document alignment area, and to disengage the at least one first moving member and the first document when the first document is moved in the second direction in the document alignment area.
205. The apparatus according to clause 204 wherein the plurality of second transports comprises at least two second moving members, each second moving member disposed from another second moving member along the first direction, wherein the at least two second moving members are movably supported on at least one movable second carriage, and wherein the at least one second carriage is in operative connection with the at least one carriage drive;
   wherein the at least one processor is operative to cause the at least one carriage drive to move the at least one second carriage to cause engagement of at least two second moving members with the first document when the first document is moved in the second direction, and to disengage the at least two second moving members and the first document when the first document is moved in the first direction.
206. The apparatus according to clause 205 and further comprising a shaft, and wherein the at least one first carriage and the at least one second carriage each rotatably move relative to the shaft responsive to the at least one carriage drive.
207. The apparatus according to clause 206 wherein the at least one carriage drive is operative to cause the at least one first moving member and at least two second moving members to move vertically relative to the first document as such first and second moving members engage and disengage the first document.
208. The apparatus according to clause 207 wherein the plurality of noncontact sensors comprise a plurality of radiation sensors aligned along the first direction.
209. The apparatus according to clause 208 wherein when in the aligned position of the first document, an edge of the first document extends parallel of the first direction.
210. The apparatus according to clause 209 wherein in moving the first document to the aligned position, the at least one processor is operative to cause the first document to be moved a different distance in the second direction by each of the plurality of second transports.
211. The apparatus according to clause 210 wherein at least two radiation sensors are each transversely aligned with a respective one of the at least two second moving members, and wherein each second transport is operative to move the first document in the second direction responsive to sensing the first document with the respective aligned radiation sensor.
212. The apparatus according to clause 211 wherein the plurality of radiation sensors comprise at least three radiation sensors aligned along the first direction, and wherein the at least one processor is operative to cause the first document to stop moving in the second direction responsive to sensing the first document with at least two of the three radiation sensors.
213. The apparatus according to clause 212 wherein the at least one first moving member comprises a first roller in supporting connection with the at least one first carriage, and wherein the at least one first roller is rotatable along the first direction, and wherein the at least one second movable member comprises at least one second roller in supporting connection with the at least one second carriage, and wherein the at least one second roller is rotatable along the second direction, and further comprising a platen including at least one first aperture and at least one second aperture, wherein the at least one first roller is rotatably and vertically movable in the at least one first aperture, and the at least one second roller is rotatably and vertically movable in the at least one second aperture.
214. The apparatus according to clause 210 wherein the at least one processor is operative to sense reduction in radiation reaching at least one radiation sensor as the first document moves in the second direction, and upon sensing no further reduction in radiation reaching the sensor, is operative to move the first document with the at least one second transport in a direction opposed of the second direction until radiation sensed as reaching the at least one radiation sensor reaches a level.
215. The apparatus according to clause 213 wherein the at least one document sensor comprises a scanning sensor, and wherein the at least one processor is operative to generate data corresponding to an image of at least a portion of the first document.
216. The apparatus according to clause 215 wherein the at least one document sensor comprises a magnetic sensor, and wherein the at least one processor is operative to generate data corresponding to magnetic indicia on the first document.
217. The apparatus according to clause 216 wherein each of the plurality of second transports includes a transport roll including at least one tapered sidewall, wherein the transport roll is positioned in generally opposed vertical relation of one of the at least one second roller.
218. The apparatus according to clause 217 and further comprising a third transport adapted to engage a document moved past the at least one document sensor, wherein the third transport is in operative connection with the at least one drive, and wherein the third transport extends in a document escrow area.
219. The apparatus according to clause 218 and further comprising at least one printer in operative connection with the at least one processor, wherein the at least one printer is adapted to print indicia on a document received in a machine.
220. The apparatus according to clause 219 and further comprising a storage area including a movable plunger member, wherein the plunger member is movable to selectively move documents received in the machine into a plurality of storage locations in the storage area.
221. The apparatus according to clause 220 wherein the first document comprises one of a currency bill and a check.
222. The apparatus according to clause 221 and further comprising a cash dispenser in supporting relation with the housing, wherein the cash dispenser is in operative connection with the at least one processor, and wherein the at least one processor is operative to cause the cash dispenser to dispense cash from the machine.
223. Apparatus comprising:
   an automated banking machine including a check accepting device in an interior area thereof;
   wherein the check accepting device includes a first check moving mechanism adapted to move checks in a first direction, and at least two second check moving mechanisms adapted to move checks independently of the first check moving mechanism and in a second direction transverse of the first direction;
   a plurality of noncontact sensors adapted to sense at least one position of at least one edge of a check in the check accepting device;
   at least one magnetic sensor in the check accepting device;
   at least one processor in operative connection with the at least one magnetic sensor, each of the first and second check moving mechanisms and plurality of noncontact sensors;
   wherein the at least one processor is operative responsive to sensing a check with the plurality of noncontact sensors to cause the check to be moved in the check receiving device by the first and second check moving mechanisms to an aligned position, and to cause magnetic indicia on the check to be read through operation of the at least one magnetic sensor.
224. The apparatus according to clause 223 wherein the plurality of noncontact sensors comprises a plurality of sensors aligned along the first direction, and wherein in the aligned position an edge of the check extends parallel of the first direction.
225. The apparatus according to clause 223 wherein the first check moving mechanism comprises a plurality of selectively vertically movable first rollers.
226. The apparatus according to clause 225 wherein each second check moving mechanism comprises at least one selectively vertically movable second roller.
227. The apparatus according to clause 223 wherein each second check moving mechanism comprises a rotatable transport roll having at least one tapered sidewall, wherein the tapered sidewall is tapered along the first direction.
228. The apparatus according to clause 223 and further comprising at least one scanning sensor in operative connection with the at least one processor, wherein the at least one processor is operative responsive to sensing the check with the at least one scanning sensor, to generate data corresponding to at least one image of at least a portion of the check.
229. The apparatus according to clause 223 and further comprising a cash dispenser in operative connection with the at least one processor, wherein the at least one processor is operative to cause a cash dispenser to dispense cash from the machine.

Having described the features, discoveries and principles of the invention, the manner in which it is constructed and operated, any of the advantages and useful results attained, the new and useful structures, devices, elements, arrangements, parts, combinations, systems, equipment, operations, methods, processes and relationships are set forth in the appended claims.

## Claims

1. A method comprising:
(a) receiving a first document in a cash dispensing ATM;
(b) sensing indicia on the first document with at least one sensing device of the ATM;
(c) analyzing data corresponding to the indicia sensed on the first document through operation of the ATM;
(d) subsequent to (b) moving the first document in a transport of the ATM including a pair of disposed document supporting rails;
(e) moving the first document into a first storage location in the ATM, including engaging the first document with a plunger member moving in a first transverse direction between the rails.

2. The method according to claim 1 and further comprising:
(f) receiving a second document in the ATM;
(g) sensing indicia on the second document with at least one sensing device of the ATM;
(h) analyzing data corresponding to the indicia sensed on the second document through operation of the ATM;
(i) subsequent to (g) moving the second document in the transport;
(j) moving the first document into a second storage location in the ATM including engaging the second document with a plunger member moving in a second transverse direction between the rails, wherein the second transverse direction is opposed of the first transverse direction.

3. The method according to claim 1 wherein (e) includes moving the first document in a first transverse direction in the first storage location against an opposing biasing force applied through a first backing plate, beyond a pair of disposed first supporting wall surfaces;
and further comprising:
(f) holding the first document in intermediate relation of the first backing plate and the first supporting wall surfaces.

4. The method according to claim 3 and subsequent to (e) and prior to (f), moving the plunger member in a second transverse direction opposed of the first direction.

5. The method according to claim 1 and further comprising:
(f) prior to (e) moving the plunger member in a second transverse direction opposed of the first transverse direction such that the plunger member is disposed on an opposed side of the transport from the first storage location.

6. The method according to claim 5 wherein (c) includes determining that the first document should be stored in the first storage location, and wherein the plunger member is moved in (f) responsive to the determination in (c).

7. The method according to claim 2 wherein (j) includes moving the second document in the second transverse direction in the second storage location against an opposing biasing force applied through a second backing plate, beyond a pair of disposed second supporting wall surfaces;
and further comprising:
(k) holding the second document in intermediate relation of the second backing plate and the second supporting wall surfaces.

8. The method according to claim 7 wherein in (f) the first document is held in a first stack in intermediate relation of the first backing plate and the first supporting wall surfaces;
and wherein in (k) the second document is held in a second stack in intermediate relation of the second backing plate and second supporting wall surfaces.

9. The method according to claim 8 wherein in (a) the first document comprises a first check and wherein in (f) the second document comprises a second check.

10. The method according to claim 8 wherein in (a) the first document comprises a check, and wherein in (f) the second document comprises a currency bill.

11. The method according to claim 8 wherein in (a) the first document comprises a check, and further comprising:
(1) prior to (b) moving the check in a first longitudinal direction in engagement with a first transport;
(m) prior to (b) and subsequent to (1) moving the check in a direction transverse of the direction the check is moved in (1) in engagement with at least two independently moving transports.

12. The method according to claim 11 wherein (m) further comprises moving the check to align an edge of the check with the first direction.

13. The method according to claim 12 wherein (m) further includes sensing the check with a plurality of non-contact sensors disposed along the first direction.

14. The method according to claim 13 wherein (b) includes sensing magnetic indicia on the check.

15. The method according to claim 14 wherein (b) includes sensing optical indicia on at least one side of the check.

16. The method according to claim 15 and prior to (e), printing indicia on the check through operation of at least one printer in the ATM.

17. The method according to claim 16 and further comprising:
(n) opening a lock controlling movement of at least one door covering the first storage location;
(o) subsequent to (n) moving the at least one door;
(p) subsequent to (o) removing the check with the first stack from between the first backing plate and the first supporting wall surfaces.

18. The method according to claim, 17 and further comprising:
prior to (n) dispensing cash from the ATM responsive to the analysis in (c).

19. The method according to claim 18 and further comprising:
(1) opening a lock controlling movement of at least one door covering the first storage location;
(m) subsequent to (1) moving the first door to an open condition;
(n) subsequent to (m) removing the first stack from between the first backing plate and first supporting wall surfaces.

20. The method according to claim 1 and further comprising:
dispensing cash from the ATM through operation of a cash dispenser.

21. An automated banking machine comprising:
at least one input device adapted to receive at least one input from users of the machine;
at least output device adapted to provide at least one output to users of the machine;
at least one currency dispenser adapted to dispense currency from the machine to users of the machine;
an item accepting opening adapted to receive into the machine, sheet items from users of the machine;
at least one sheet item transport in the machine, wherein the at least one transport is in operative connection with the item accepting opening, and wherein the at least one transport includes a pair of disposed sheet supporting rail portions;
a storage area, wherein the rail portions of the at least one transport extend in the storage area and intermediate a first sheet storage location and a second sheet storage location in the storage area;
a movably mounted plunger member in the storage area, wherein the plunger member is movable transversely between the rail portions;
at least one drive in operative connection with the plunger member, wherein the at least one drive is operative to selectively move the plunger transversely between the rail portions;
wherein when a sheet is in the at least one transport, movement of the plunger member in a first transverse direction between the rail portions is operative to cause a sheet to move to the first storage location, and movement of the plunger member in a second transverse direction opposed of the first transverse direction is operative to cause the sheet to move to the second storage location.

22. The machine according to claim 21 and further comprising:
a first backing plate movably mounted in the storage area and bounding the first storage location;
a first biasing mechanism in operative connection with the first backing plate and biasing the first backing plate to move toward the rail portions;
wherein movement of the plunger member in the first transverse direction causes the first backing plate to move against the force of the first biasing mechanism in the first transverse direction and the sheet to be in supporting connection with the first backing plate.

23. The machine according to claim 22 and further comprising:
a second backing plate movably mounted in the storage area and bounding the second storage location;
a second biasing mechanism in operative connection with the second backing plate and biasing the second backing plate to move toward the rail portions;
wherein movement of the plunger member in the second transverse direction causes the second backing plate to move against the force of the second biasing mechanism in the second transverse direction, and the sheet to be in supporting connection with the second backing plate.

24. The machine according to claim 23 and further comprising:
at least one processor in operative connection with the at least one drive;
at least one sensing device in operative connection with the at least one processor, wherein the at least one sensing device is operative to sense the indicia on the sheet;
wherein the at least one processor is operative responsive to indicia sensed on the sheet to operate the drive to move the sheet to one of the first storage location and second storage location.

25. The machine according to claim 24 and further comprising a sheet path in the machine, wherein the sheet path extends between the item accepting opening and the storage area, and wherein the at least one sensing device is adapted to sense indicia on the sheet in the sheet path, and wherein the at least one processor is operative to position the plunger member on a second transverse side of the rail portions opposite the first storage location prior to the sheet being in engagement with the rail portions, whereby movement of the plunger member in the first transverse direction when the sheet is between the rail portions, moves the sheet to the first storage location.

26. The machine according to claim 25 wherein the at least one processor is operative to position the plunger member on a first transverse side of the rail portions opposite the second storage location prior to the sheet being in engagement with the rail portions, whereby movement of the plunger member in the second transverse direction when the sheet is between the rail portions moves the sheet to the second storage location.

27. The machine according to claim 26 and further comprising:
a pair of disposed first wall surfac s bounding the first storage location and in opposed facing direction of the first backing plate;
wherein when the plunger member moves the sheet from engagement with the rail portions to the first storage location, the plunger member moves in the first transverse direction between the first wall surfaces and moves the sheet in the first transverse direction beyond the first wall surfaces;
and wherein after the sheet is in the first storage location, when the plunger member moves in the second transverse direction from the first storage location, the sheet is positioned between the first wall surfaces and the first backing plate.

28. The machine according to claim 27 and further comprising:
a pair of opposed second wall surfaces bounding the second storage location and in opposed facing direction of the second backing plate;
wherein when the plunger member moves the sheet from engagement with the rail portions to the second storage location, the plunger member moves in the second transverse direction between the second wall surfaces and moves the sheet in the second transverse direction beyond the second wall surfaces;
and wherein the sheet is in the second storage location, when the plunger member moves in the first transverse direction from the second storage location, the sheet is positioned between the second wall surfaces and the second backing plate.

29. The machine according to claim 28 wherein the rail portions extend generally vertically in the storage area, and wherein when the plunger member moves transversely between the rail portions the plunger member moves generally horizontally.

30. The machine according to claim 29 wherein the at least one sensing device comprises a scanning sensor, and wherein the at least one processor is operative responsive to the scanning sensor to generate data corresponding to an image of at least a portion of the sheet.

31. The machine according to claim 30 wherein the at least one sensing device further comprises a magnetic sensing device.

32. The machine according to claim 31 and further comprising:
at least one printer adjacent the sheet path, wherein the at least one printer is in operative connection with the at least one processor, and wherein the at least one printer is adapted to print indicia on the sheet in the sheet path.

33. The machine according to claim 32 and further comprising a first sheet moving transport and a second sheet moving transport, wherein the first sheet moving transport moves the sheet in a first sheet moving direction and the second sheet moving transport moves the sheet in a second sheet moving direction generally perpendicular of the first sheet moving direction.

34. The machine according to claim 33 and further comprising:
a plurality of noncontact sensors disposed along the first direction, wherein each of the plurality of noncontact sensors is in operative connection with the at least one processor;
at least one second transport drive in operative connection with the second transport and the at least one processor,
wherein the at least one processor is operative to cause the sheet to be aligned in the first sheet moving direction by moving the sheet in the second sheet moving direction and sensing the sheet with a plurality of noncontact sensors.

35. The machine according to claim 34 and further comprising at least one movable door overlying the storage area, wherein moving the door enables accessing the first and second storage locations.

36. The machine according to claim 34 and further comprising a first stack of sheets in the first storage location, wherein moving the plunger member in the first transverse direction between the rail portions is operative to include the sheet in the first stack.

37. The machine according to claim 36 and further comprising a second stack of sheets in the second storage location, wherein moving the plunger member in the second transverse direction between the rail portions is operative to include the sheet in the second stack.

38. The machine according to claim 34 wherein the magnetic sensing device is adapted to read micr characters on the sheet.

39. The machine according to claim 34 wherein the sheet path includes an escrow area between the at least one sensing device and the storage area.

40. The machine according to claim 34 wherein the sheet comprises a check and wherein the at least one processor is operative to cause to be sent from the machine data corresponding to an image of at least a portion of the check.

41. The machine according to claim 34 wherein the storage area is movably mounted in supporting connection with the machine, and wherein the storage area is movable to extend outside the machine.

42. The machine according to claim 21 and further comprising:
at least one processor in operative connection with the at least one drive;
at least one sensing device in operative connection with the at least one processor, wherein the at least one sensing device is operative to sense indicia on the sheet;
wherein the at least one processor is operative responsive to indicia sensed on the sheet to cause the at least one drive to move the sheet to one of the first storage location and the second storage location.

43. The machine according to claim 21 and further comprising at least one processor in operative connection with the at least one drive, wherein the at least one processor is operative to cause the plunger member to be positioned on an opposed side of the rail portions from the storage location to which the sheet will be moved, prior to the sheet being in the storage area.

44. The machine according to claim 21 and further comprising:
at least one processor;
at least one scanning sensor operative to sense indicia on the sheet, wherein the at least one scanning sensor is in operative connection with the at least one processor;
wherein the at least one processor is operative to cause to be sent from the machine, data corresponding to an image of at least a portion of the sheet.

45. The machine according to claim 44 wherein the sheet comprises a check.

46. The machine according to claim 45 and further comprising at least one magnetic sensing device in operative connection with the at least one processor, wherein the at least one magnetic sensing device is operative to read micr data on the check, and wherein the at least one processor is operative to cause to be sent from the machine, data corresponding to the micr data read from the check.

47. The machine according to claim 21 wherein the sheet comprises at least one of a check and a currency bill.
